(19) Europäisches Patentamt
European Patent Office
Office européen des brevets

(11) **EP 3 604 802 B1**

(12) **EUROPEAN PATENT SPECIFICATION**

(45) Date of publication and mention
of the grant of the patent:
**06.04.2022   Bulletin 2022/14**

(21) Application number: **18775162.3**

(22) Date of filing: **15.03.2018**

(51) International Patent Classification (IPC):
**F03D 15/10** *(2016.01)*       **F03D 1/04** *(2006.01)*

(52) Cooperative Patent Classification (CPC):
**F03D 1/04; F03D 15/10;** Y02E 10/20; Y02E 10/72

(86) International application number:
**PCT/JP2018/010241**

(87) International publication number:
**WO 2018/180546 (04.10.2018 Gazette 2018/40)**

(54) **POWER GENERATION SYSTEM**

STROMERZEUGUNGSSYSTEM

SYSTÈME DE PRODUCTION D'ÉNERGIE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority:   **30.03.2017   JP 2017067984**

(43) Date of publication of application:
**05.02.2020   Bulletin 2020/06**

(73) Proprietor: **Okumura, Hisakazu
Kyoto-shi, Kyoto 606-8156 (JP)**

(72) Inventor: **Okumura, Hisakazu
Kyoto-shi, Kyoto 606-8156 (JP)**

(74) Representative: **Morbidini, Marco et al
Kilburn & Strode LLP
Lacon London
84 Theobalds Road
London WC1X 8NL (GB)**

(56) References cited:
KR-B1- 101 691 769      US-A- 1 557 126
US-A- 4 242 050          US-A1- 2002 096 002
US-A1- 2015 054 287      US-A1- 2015 288 236

**Description**

Technical Field

The present invention relates to a power generation system capable of generating electric power using a natural energy, such as hydraulic power or wind power.

Background Art

In recent years, along with an increase in environmental awareness brought about by global warming, there has been a demand for electric power generation using a natural energy such as hydraulic power, wind power, and the like; however, because Japan has a small land area, it is difficult to newly construct large-scale hydroelectric power generation facilities or wind power generation facilities. US 2015/288236 A1 discloses an apparatus and methods for converting torque.

Summary of Invention

Technical Problem

The present invention was made in light of the above problem, and an object of the invention is to provide a power generation system installed in a river, a channel, a coast, a windy place, or the like to thereby enable power generation using a natural energy such as hydraulic power, wind power, or the like.

Solution to Problem

In order to achieve the object, the present invention, which is defined in accordance with claim 1, encompasses the following items.

Solution to Problem

[Item 1]

A power generation system, comprising:

a turbine having a first rotating shaft that rotates by application of hydraulic power or wind power;
a cam wheel device comprising a cam wheel having cams projecting from an outer peripheral face, the cam wheel rotating as a torque of the first rotating shaft is transmitted to the cam wheel;
a power generator comprising a second rotating shaft and a drive wheel connected to the second rotating shaft, the power generator being capable of generating electric power by converting rotational energy of the second rotating shaft, which is generated as the second rotating shaft rotates along with the rotation of the drive wheel, to electric energy; and
an arm mechanism disposed between the cam wheel device and the power generator,
wherein:
as the cams are brought in contact with the arm mechanism along with the rotation of the cam wheel, a rotary motion is generated in the arm mechanism, and the arm mechanism is brought in contact with the drive wheel by the rotary motion, thereby rotating the drive wheel.

|The arm mechanism comprises a swing arm, a biasing means, a follower arm, and a drive arm;

an intermediate portion of the swing arm is pivotally supported by a first pin extending in the vertical direction so as to be capable of a rotary motion, a first end portion of the swing arm is disposed in the vicinity of the cam wheel, and a first through-hole, which extends in the longitudinal direction
of the swing arm, is formed on a second end of the swing arm;
each time the cams come in contact with the first end portion of the swing arm by rotation of the cam wheel, a rotary motion is generated in the swing arm around the first pin as the axis in the first direction due to the pressing force of the cams;
the biasing means biases the swing arm toward a second direction, which is opposite to the first direction, every time the swing arm undergoes a rotary motion in the first direction, and, after the swing arm undergoes a rotary motion in the first direction, the swing arm inverts to undergo a rotary motion in the second direction by the biasing force of the biasing means;

a first end portion of the follower arm is pivotally supported by the first pin so as to be capable of a rotary motion, and a second pin extending in the vertical direction is attached to a second end portion of the follower arm;

an intermediate portion of the drive arm is pivotally supported by the second pin so as to be capable of a rotary motion, a third pin extending in the vertical direction is attached to a first end portion of the drive arm, and the third pin is inserted in the first through-hole of the swing arm;

an elastic member is attached to a second end portion of the drive arm, the elastic member extends from the second end portion of the drive arm in the longitudinal direction of the drive arm, and a top end portion of the elastic member is disposed in the vicinity of the drive wheel;

during the rotary motion of the swing arm in the first direction, since a rotary motion to press the third pin against an inner peripheral face of the first through-hole of the swing arm is generated in the drive arm by moving the third pin to a second end side of the swing arm, the swing arm pulls the third pin in the first direction, thereby moving the drive arm in the first direction, and the follower arm undergoes a rotary motion in the first direction around the first pin as the axis by pulling of the second pin;

while the drive arm moves in the first direction, due to the rotary motion to move the third pin to the second end side of the swing arm generated in the drive arm, the elastic member moves in the first direction in which the top end portion thereof does not come in contact with an outer peripheral face of the drive wheel;

during the rotary motion of the swing arm in the second direction, since a rotary motion to press the third pin against the inner peripheral face of the first through-hole of the swing arm is generated in the drive arm by moving the third pin to the first end side of the swing arm, the swing arm pulls the third pin in the second direction, thereby moving the drive arm in the second direction, and the follower arm undergoes a rotary motion in the second direction around the first pin as the axis by pulling of the second pin; and

while the drive arm moves in the second direction, due to the rotary motion to move the third pin to the first end side of the swing arm generated in the drive arm, the elastic member moves in the second direction in which the top end portion thereof comes in contact with the outer peripheral face of the drive wheel, and the drive wheel rotates by pressing by the elastic member.

[Item 2]

The power generation system according to Item 1, further comprising a moving means capable of moving the arm mechanism to a power generator side or a side opposite to the power generator, wherein:

by moving the arm mechanism to the power generator side by the moving means, a range of the elastic member in contact with the outer peripheral face of the drive wheel while the drive arm moves in the second direction is enlarged; and

by moving the arm mechanism to the side opposite to the power generator by the moving means, the range of the elastic member in contact with the outer peripheral face of the drive wheel while the drive arm moves in the second direction is reduced.

[Item 3]

The power generation system according to Item 2, wherein:

the moving means comprises a supporting plate for supporting the first pin, and a first stepping motor;

a screw hole is formed on a side surface of the supporting plate;

the first stepping motor is disposed laterally to the supporting plate and comprises a third rotating shaft, which is screwed into the screw hole;

by rotating the third rotating shaft of the first stepping motor in the normal direction, the supporting plate and the first pin move to the power generator side, thereby moving the arm mechanism to the power generator side; and

by rotating the third rotating shaft of the first stepping motor in the reverse direction, the supporting plate and the first pin move to the side opposite to the power generator, thereby moving the arm mechanism to the side opposite to the power generator.

[Item 4]

The power generation system according to Item 3, further comprising a movement control device for controlling movement of the arm mechanism,
wherein:

the movement control device comprises a first sensor for measuring the rotation rate per unit time of the drive wheel, and a motor control means for controlling the first stepping motor based on a measurement value of the first sensor; the motor control means inversely rotates the third rotating shaft of the first stepping motor when the measurement value of the first sensor is greater than the target value; and the motor control means normally rotates the third rotating shaft of the first stepping motor when the measurement value of the first sensor is smaller than the target value.

[Item 5]

The power generation system according to any one of Items 1 to 4, further comprising a rotation control device for controlling rotation of the cam wheel,
wherein:

the cam wheel device further comprises a main drive shaft for rotatably supporting the cam wheel, and a clutch mechanism for switching connection and disconnection between the main drive shaft and the cam wheel; the main drive shaft rotates as the torque of the first rotating shaft is transmitted to the main drive shaft; in a state where the main drive shaft and the cam wheel are connected, the cam wheel rotates as the torque of the main drive shaft is transmitted to the cam wheel; in a state where the main drive shaft and the cam wheel are disconnected, the cam wheel does not rotate because the torque of the main drive shaft is not transmitted to the cam wheel; the rotation control device comprises a second sensor for measuring a rotation rate per unit time of the main drive shaft, and a clutch control means for controlling the clutch mechanism based on a measurement value of the second sensor; the clutch control means causes the clutch mechanism to disconnect the main drive shaft and the cam wheel when the measurement value of the second sensor is greater than a predetermined value; and the clutch control means causes the clutch mechanism to connect the main drive shaft and the cam wheel when the measurement value of the second sensor falls below the predetermined value.

[Item 6]

The power generation system according to any one of Items 1 to 5, further comprising a transmission,
wherein:

the transmission comprises an input shaft that rotates as the torque of the first rotating shaft is transmitted; an output shaft that rotates as the torque of the input shaft is transmitted; a third sensor that measures an input rotation rate, which is a rotation rate of the input shaft per unit time; a fourth sensor that measures an output rotation rate, which is a rotation rate of the output shaft per unit time; and a control means for controlling a transmission ratio, which is a ratio of the input rotation rate to the output rotation rate so that the output rotation rate becomes constant; and the cam wheel rotates as the torque of the output shaft is transmitted to the cam wheel.

[Item 7]

The power generation system according to any one of Items 1 to 6, wherein:

the biasing means comprises a coil spring; and
with the rotary motion of the swing arm in the first direction, a force is applied to the coil spring in its helical direction so that the diameter of the coil spring is reduced, and the swing arm is biased toward the second direction by a repulsive force of the coil spring against the applied force.

[Item 8]

The power generation system according to Item 7, wherein the biasing means further comprises a pedestal on which the coil spring is placed, and a rotating means for rotating the pedestal in its circumferential direction;

a first end portion of the coil spring is connected to the pedestal or a first block fixed to the pedestal; and
a second end portion of the coil spring is connected to the swing arm or a second block from which a tube to be inserted into a second through-hole of the swing arm extends.

[Item 9]

The power generation system according to Item 8, wherein:

the rotating means comprises a drive mechanism disposed around the pedestal, and a solenoid;
the drive mechanism comprises a second stepping motor comprising a fourth rotating shaft, and a rotary member that has a first end fixed to the fourth rotating shaft and that undergoes a rotary motion with rotation of the fourth rotating shaft around the fourth rotating shaft as the axis;
the solenoid comprises a coil wound around a bobbin, a case storing the coil, a cylindrical yoke disposed on an inner peripheral portion of the coil, and a plunger that is disposed in an inner peripheral portion of the yoke and that receives a magnetic attractive force generated in the yoke upon power feeding to the coil and that performs forward and backward movement along the axis core direction of the yoke;
a third through-hole that penetrates through the rotary member is formed on a second end of the rotary member, and extends in the longitudinal direction of the rotary member;
a fourth pin that extends upward is attached to the outer periphery of the pedestal, and the fourth pin is inserted in the third through-hole of the rotary member;
a plurality of recesses is formed in an outer side surface of the pedestal at intervals in the circumferential direction of the pedestal, and the plunger is inserted into one of the plurality of recesses;
after the plunger is retreated to be removed from a first recess, the fourth rotating shaft is rotated to cause a rotary motion of the rotary member, thereby rotating the pedestal to set the plunger to be opposed to a second recess; and
the rotation of the pedestal is regulated by moving the plunger forward and inserting the plunger into the second recess in a state where the plunger is opposed to the second recess.

[Item 10]

The power generation system according to any one of Items 1 to 6, wherein the biasing means comprises an accumulator;

the accumulator comprises a container for storing an accumulation gas; and
with the rotary motion of the swing arm in the first direction, surplus fluid is introduced into the container, thereby compressing the accumulation gas, so that the swing arm is biased toward the second direction by an expansion force of the compressed accumulation gas.

[Item 11]

The power generation system according to any one of Items 1 to 10, wherein:

the cam wheel device comprises a plurality of the cam wheels and a or the main drive shaft pivotally supporting the plurality of cam wheels while allowing them to be rotatable, and the power generator and the arm mechanism are provided for each of the cam wheels;
the main drive shaft rotates as the torque of the first rotating shaft is transmitted to the main drive shaft; and
each of the cam wheels rotates as a torque of the main drive shaft is transmitted to each of the cam wheels.

Advantageous Effects of Invention

In the power generation system of the present invention, the rotation of the first rotating shaft is transmitted to the drive wheel through the cam wheel or the arm mechanism, thereby rotating the drive wheel. By this rotation, power is generated. Since the power generation system of the present invention is installed in a river, a channel, a coast, a windy place, or the like, it is possible to apply hydraulic power, wind power, or the like to the first rotating shaft, thereby rotating the first rotating shaft. Therefore, by being installed in a river, a channel, a coast, a windy place, or the like, the power generation system of the present invention is capable of generating power using a natural energy, such as hydraulic power, wind power, or the like.

Brief Description of Drawings

Fig. 1 is a perspective view showing a power generation system according to an embodiment of the present invention.
Fig. 2 is a plan view showing a power generation system according to an embodiment of the present invention.
Fig. 3 is an enlarged perspective view of an arm mechanism.
Fig. 4 is an enlarged lateral view of a clutch mechanism.
Fig. 5 is a schematic diagram showing movements of a follower arm and a drive arm during a rotary motion of a swing arm in the first direction.
Fig. 6 is a schematic diagram showing movements of a follower arm and a drive arm during a rotary motion of a swing arm in the second direction.
Fig. 7 is a block diagram showing a structure of a movement control device.
Fig. 8 is a flowchart showing an operation by a motor control means provided in a movement control device.
Fig. 9 is a block diagram showing a structure of a rotation control device.
Fig. 10 is a flowchart showing an operation by a clutch control means provided in a rotation control device.
Fig. 11 is a perspective view showing a modification example of a biasing means.
Fig. 12 is a perspective view showing a modification example of a power generation system of the present invention.

Description of Embodiments

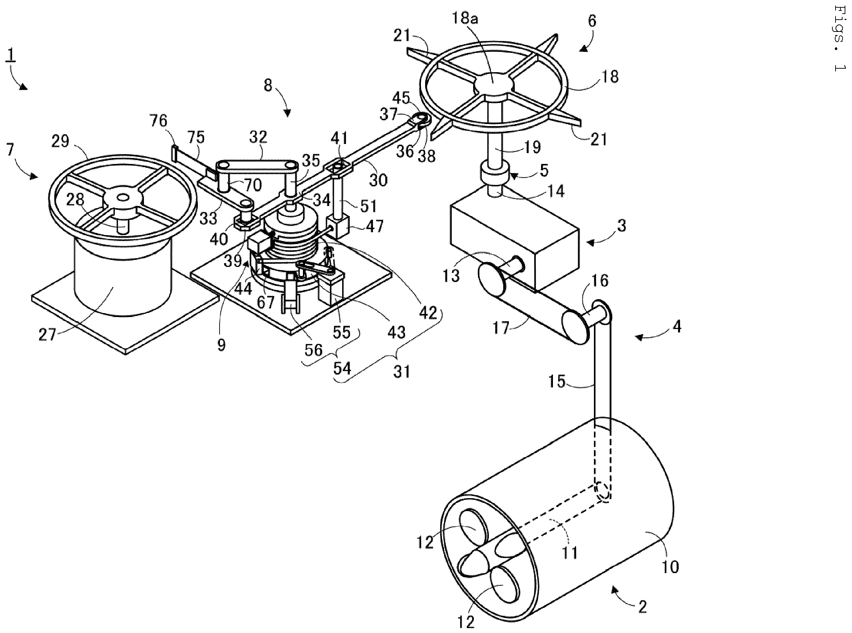

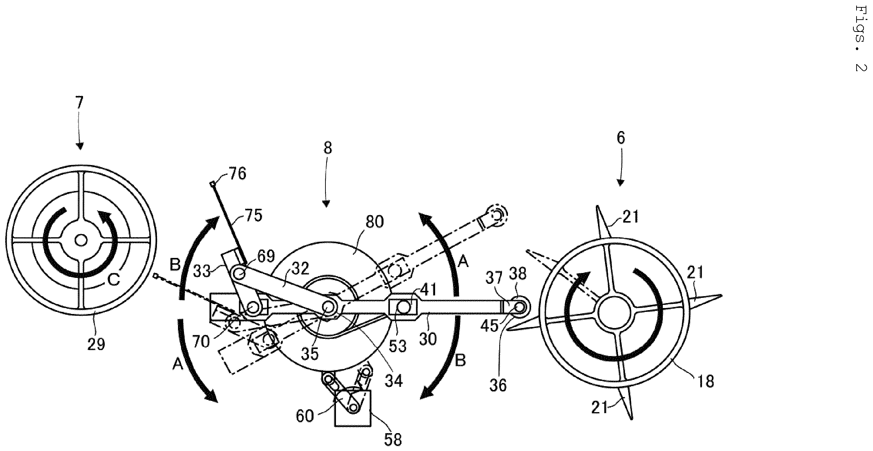

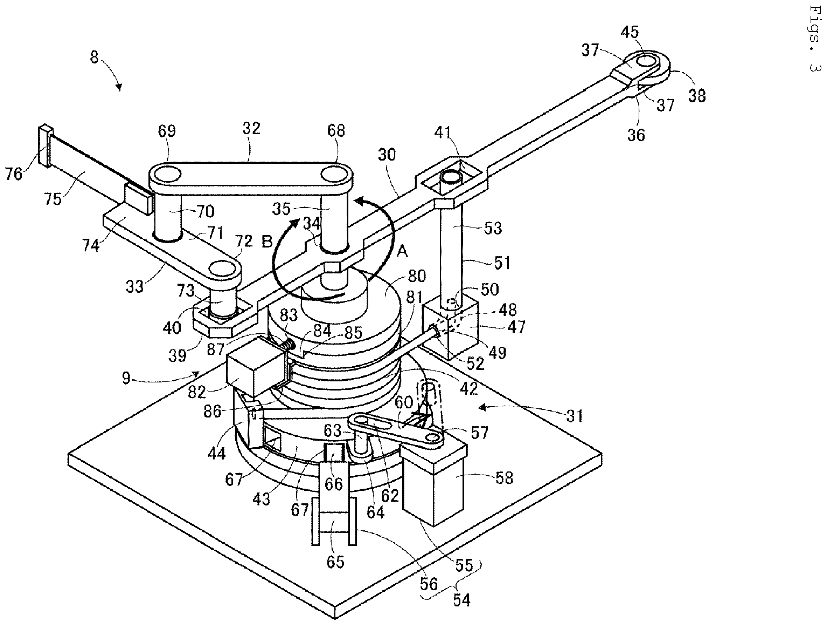

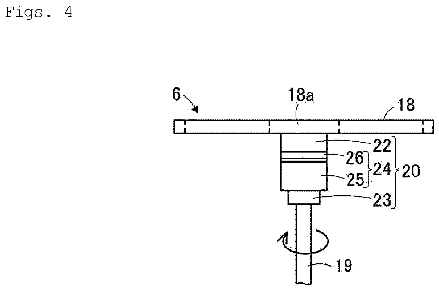

An embodiment of the present invention is explained below with reference to the attached drawings. Fig. 1 is a perspective view showing a power generation system 1 according to an embodiment of the present invention. Fig. 2 is a plan view showing a power generation system 1 according to an embodiment of the present invention. Fig. 3 is an enlarged perspective view of an arm mechanism described later. Fig. 4 is an enlarged lateral view of a clutch mechanism 20.

The power generation system 1 according to the present embodiment is capable of generating power by being installed in a river, a channel, a coast, a windy place, or the like. As shown in Figs. 1 to 3, the power generation system 1 comprises a turbine 2, a transmission 3, a belt mechanism 4, a coupling 5, a cam wheel device 6, a power generator 7, an arm mechanism 8, and a moving means 9.

As shown in Fig. 1, the turbine 2 comprises a tubular body 10, and a rotating shaft 11 rotatably provided inside the tubular body 10. The turbine 2 is installed so that water of a river, a channel, a sea, or wind passes through the inside of the tubular body 10 (when the power generation system 1 is installed in a river, a channel, or a coast, the turbine 2 is immersed in the water of the river, the channel, or the sea so that water passes through the inside of the tubular body 10).

A plurality of blades 12 are attached to the outer peripheral face of the rotating shaft 11 in the circumferential direction of the rotating shaft 11. The rotating shaft 11 rotates around the axis when hydraulic power or wind power is applied to the blades 12. Alternatively, a series of blades extending spirally in the axial direction of the rotating shaft 11 may be formed on the outer peripheral face of the rotating shaft 11. In this case as well, the rotating shaft 11 rotates as hydraulic power or wind power is applied to the rotating shaft 11.

The transmission 3 comprises an input shaft 13 that rotates as the torque of the rotating shaft 11 is transmitted; an output shaft 14 that rotates as the torque of the input shaft 13 is transmitted; an input rotation rate sensor (not shown) that measures an input rotation rate, which is a rotation rate per unit time of the input shaft 13; an output rotation rate sensor that measures an output rotation rate, which is a rotation rate per unit time of the output shaft 14; and a control means (not shown) for controlling a transmission ratio, which is a ratio of the input rotation rate to the output rotation rate, so that the output rotation rate becomes constant. As the main body of the transmission 3 comprising the input shaft 13 and the output shaft 14, the Zero-Max® continuously variable transmission produced by Miki Pulley Co., Ltd. can be used. This continuously variable transmission is capable of changing the transmission ratio by an operation using a lever. When this continuously variable transmission is used, the control means controls the movement of the lever based on the input rotation rate and the output rotation rate.

The belt mechanism 4 connects the rotating shaft 11 of the turbine 2 to the input shaft 13 of the transmission 3. The torque of the rotating shaft 11 is transmitted to the input shaft 13 of the transmission 3 through the belt mechanism 4, thereby rotating the input shaft 13 of the transmission 3. In the illustrated example, the belt mechanism 4 is provided with an endless belt 15, a driven roller 16, an endless belt 17, and the like. The belt 15 is hung loopwise on the rotating shaft 11 and the driven roller 16. The belt 17 is hung loopwise on the driven roller 16 and the input shaft 13 of the transmission 3. In the illustrated belt mechanism 4, the torque of the rotating shaft 11 is transmitted to the driven roller 16 through the belt 15, thereby rotating the driven roller 16. Further, the torque of the driven roller 16 is transmitted to the input shaft 13 through the belt 17, thereby rotating the input shaft 13.

The number of belts provided in the belt mechanism 4 is not limited to 2 as in the illustrated example, and any number of plural belts other than 2 may be provided. Alternatively, only one belt 11 may be hung loopwise on the rotating shaft 11 and the input shaft 13. As described above, in both cases of providing a plurality of belts other than 2 and providing only one belt, the torque of the rotating shaft 11 is transmitted to the input shaft 13 of the transmission 3, thereby rotating the input shaft 13. By providing a plurality of belts, the portion where the turbine 2 is disposed can be set more freely, thereby enabling the turbine 2 to be easily immersed in the water of a river, a channel, or a sea. It may also be arranged such that the rotating shaft 11 and the input shaft 13 are connected by a known means other than the belt mechanism so that the torque of the rotating shaft 11 is transmitted to the input shaft 13.

The cam wheel device 6 comprises a cam wheel 18, a main drive shaft 19, and a clutch mechanism 20 (Fig. 4). A plurality of cams 21 are formed on the outer peripheral face of the cam wheel 18 at regular intervals in the circumferential direction. The main drive shaft 19 rotatably supports the cam wheel 18.

The coupling 5 connects the output shaft 14 of the transmission 3 to the main drive shaft 19 of the cam wheel device 6. The torque of the output shaft 14 is transmitted to the main drive shaft 19 through the coupling 5, thereby rotating the main drive shaft 19. It may also be arranged such that the output shaft 14 and the main drive shaft 19 are connected by a known means other than the coupling 5 so that the torque of the output shaft 14 is transmitted to the main drive shaft 19 (for example, by providing a belt hung loopwise on the output shaft 14 and the main drive shaft 19, the torque of the output shaft 14 may be transmitted to the main drive shaft 19 through this belt).

The clutch mechanism 20 shown in Fig. 4 is capable of switching connection and disconnection of the main drive shaft 19 and the cam wheel 18. The clutch mechanism 20 comprises a cam wheel hub 22, an electromagnetic clutch receiver 23, and an electromagnetic clutch 24.

The cam wheel hub 22 is fixed to the lower face in the center of the cam wheel 18.

The electromagnetic clutch receiver 23 is fixed to the upper end of the main drive shaft 19, and rotates integrally with the main drive shaft 19.

The electromagnetic clutch 24 comprises a clutch rotor 25, which is a rotor in the input side; a clutch armature 26, which is a rotor in the output side; a plate spring hub (not shown) serving as an elastic member; and a clutch stator (not shown) serving as an electromagnetic force generating means.

The clutch rotor 25 is fixed to the electromagnetic clutch receiver 23, and rotates integrally with the main drive shaft 19. The clutch armature 26 is fixed to the cam wheel hub 22, and is disposed to face the clutch rotor 25. The plate spring hub (not shown) biases the clutch armature 26 toward a direction away from the clutch rotor 25. The clutch stator (not shown) therein contains a coil (electromagnet), and generates electromagnetic force by energization.

According to the clutch mechanism 20 described above, with the electromagnetic force of the clutch stator (not shown), the clutch armature 26 is pulled toward the clutch rotor 25 side against the elastic force of the plate spring hub (not shown), thereby adhering the clutch armature 26 to the clutch rotor 25. With this adhesion, the main drive shaft 19 and the cam wheel 18 are connected. In this connection state, the torque of the main drive shaft 19 is transmitted to the cam wheel 18, thereby rotating the cam wheel 18.

According to the clutch mechanism 20, by demagnetizing the coil of the clutch stator, the clutch armature 26 can be separated from the clutch rotor 25 by the elastic force of the plate spring hub. With this disconnection, the main drive shaft 19 and the cam wheel 18 are disconnected. In this disconnection state, the torque of the main drive shaft 19 is not transmitted to the cam wheel 18; therefore, the cam wheel 18 does not rotate.

As shown in Figs. 1 and 2, the power generator 7 comprises a cylindrical case 27, a rotating shaft 28 extending from the cylindrical case 27, and a drive wheel 29. The rotating shaft 28 is connected to the center of the drive wheel 29. In the power generator 7, the rotating shaft 28 rotates with the rotation of the drive wheel 29, and the rotational energy of the rotating shaft 28 is converted to electric energy by electromagnetic induction, thereby generating power. More specifically, in the power generator 7, a magnet (not shown) and a coil (not shown) are provided inside the cylindrical case 27. When the magnet is moved relative to the coil by the rotation of the rotating shaft 28, the magnetic flux passing through the coil is changed, thereby generating electromotive force in the coil.

The arm mechanism 8 is disposed between the cam wheel device 6 and the power generator 7. The arm mechanism 8 generates a rotary motion as the cams 21 come in contact with the first end (the first end 36 of the swing arm 30 described later) by the rotation of the cam wheel 18. Further, with the rotary motion of the arm mechanism 8, the second end of the arm mechanism 8 (the top end portion 76 of the elastic member 75 described later) comes in contact with the drive wheel 29, causing the drive wheel 29 to rotate, thereby generating power in the power generator 7. The structure of the arm mechanism 8 is specifically described below.

As shown in Figs. 1 to 3, the arm mechanism 8 includes a swing arm 30, a biasing means 31, a follower arm 32, and a drive arm 33.

The intermediate portion 34 of the swing arm 30 is pivotally supported by a pin 35 extending in the vertical direction so as to be capable of a rotary motion. The first end 36 of the swing arm 30 is disposed in the vicinity of the cam wheel device 18. In the first end 36, a pair of opposing plates 37, a pin 45, and a roller 38 are provided. The pair of opposing plates 37 are disposed oppositely in terms of the vertical direction. The pin 45 extends from one side to the other side of the pair of opposing plates 37, and both ends thereof are connected to the opposing plates 37. The roller 38 is pivotally supported by the pin 45 between the pair of opposing plates 37 so as to be capable of a rotary motion. When the cam wheel 18 rotates, a plurality of cams 21 formed on the outer peripheral face of the cam wheel 18 successively come in contact with the roller 38. Each time the cams 21 come in contact with the roller 38, a rotary motion around the pin 35 as the axis is generated in the swing arm 30 in the first direction A by the pressing of the cams 21.

A through-hole 40 is formed on the second end 39 of the swing arm 30. A through-hole 41 is formed in the range of the first end side of the swing arm 30 (the range between the pin 35 and the first end 36 of the swing arm 30). The through-holes 40 and 41 extend in a predetermined length in the longitudinal direction of the swing arm 30.

The biasing means 31 biases the swing arm 30 toward the second direction B, which is opposite to the first direction A, every time the swing arm 30 undergoes a rotary motion in the first direction A. The structure of the biasing means 31 is described below.

The biasing means 31 comprises a coil spring 42 and a pedestal 43. The coil spring 42 is mounted on the upper face of the pedestal 43.

The coil spring 42 is disposed below the swing arm 30, and the axis core of the coil spring 42 is positioned immediately below the pin 35.

A block 44 is fixed to the outer side surface of the pedestal 43, and the first end of the coil spring 42 is connected to the block 44 fixed to the pedestal 43. The block 44 may be omitted; instead, the first end of the coil spring 42 may be directly connected to the pedestal 43.

The second end of the coil spring 42 is connected to a block 47. As shown in Fig. 3, the block 47 is a rectangular solid, and has an upper face, a lower face, and four side surfaces perpendicular to the upper and lower faces.

A through-hole 48 is formed on the block 47. The through-hole 48 extends in the horizontal direction, and then extends upward. Openings 49 and 50 of the through-hole 48 are formed on a side surface and the upper face of the block 47.

The first end of a tube 51 is inserted in the through-hole 48 of the block 47. The first end of the tube 51 extends in the horizontal direction, and is then bent upward along the through-hole 48. The first end 52 of the tube 51 (Fig. 3) is exposed from the opening 49 to a side surface of the block 47. The second end 53 of the tube 51 extends upward from the opening 50 in the upper face of the block 47, and is inserted into the through-hole 41 of the swing arm 30.

The second end of the coil spring 42 is inserted into the tube 51 from the first end 52 of the tube 51. The second end of the coil spring 42 extends in the horizontal direction, and is then bent upward along the tube 51.

With the structure described above, since the second end 53 of the tube 51 is inserted into the through-hole 41, when the swing arm 30 undergoes a rotary motion in the first direction A, the tube 51 and the block 47 are moved in the first direction A by the traction (pulling) of the swing arm 30. Further, since the block 47 moves in the first direction A, a force is applied to the coil spring 42 in the helical direction so that the diameter of the coil spring 42 is reduced, thereby generating a repulsive force (resilience) in the coil spring 42 against the applied force. Then, the repulsive force (resilience) is transmitted to the swing arm 30 through the block 47 and the tube 51, thereby biasing the swing arm 30 toward the second direction B. Further, as a result of the biasing, the swing arm 30 undergoes a rotary motion in the first direction A, and is then inverted to undergo a rotary motion in the second direction B. Further, while the force to reduce the diameter of the coil spring 42 is applied by the traction of the swing arm 30, since the second end of the coil spring 42 is bent (i.e., the second end of the coil spring 42 extends in the horizontal direction and then extends upward), the second end of the coil spring 42 is prevented from coming off from the tube 51.

Although the through-hole 41 is formed on the first end side of the swing arm 30 in the illustrated example, it may also be structured such that the through-hole 41 is formed on the second end side of the swing arm 30, and the second end 53 of the tube 51 is inserted into the through-hole 41. Further, the block 47, the tube 51 and the through-hole 41 may be omitted, and the second end of the coil spring 42 may be connected to the first or second end of the swing arm 30. Additionally, with this structure, since a repulsive force (resilience) against the applied force may also be generated in the coil spring 42 in addition to the force to reduce the diameter of the coil spring 42 by the traction of the swing arm 30, it is possible to bias the swing arm 30 in the second direction B, and cause a rotary motion of the swing arm 30 in the second direction B. According to the structure in which the block 47, the tube 51, and the through-hole 41 are provided as in the illustrated example, a portion extending horizontally toward the second end of the coil spring 42 can be generated, thereby smoothly applying a force to the coil spring 42 in the helical direction.

The biasing means 31 further comprises a rotating means 54, in addition to the coil spring 42 and the pedestal 43. The rotating means 54 is capable of rotating the pedestal 43 in the circumferential direction thereof to adjust the orientation of the swing arm 30. The "orientation" of the swing arm 30 means an orientation of the swing arm 30 when the rotary motion of the swing arm 30 by the pressing of the cams 21 or the biasing action of the biasing means 31 is not generated in the swing arm 30.

As shown in Fig. 3, the rotating means 54 comprises a drive mechanism 55 and a solenoid 56, which are disposed around the pedestal 43.

The drive mechanism 55 comprises a stepping motor 58 comprising a rotating shaft 57, and a rotary member 60 having a first end fixed to the rotating shaft 57. The rotary member 60 undergoes a rotary motion about the rotating shaft 57 as the axis along with the rotation of the rotating shaft 57 by the power of the motor 58. A through-hole 62 is formed on the second end side of the rotary member 60. The through-hole 62 extends in a predetermined length in the longitudinal direction of the rotary member 60. A pin 63 is inserted in the through-hole 62. The pin 63 extends upward from the outer periphery of the pedestal 43 (in the illustrated example, the pin 63 extends upward from a projecting portion 64 that constitutes the outer periphery of the pedestal 43).

The solenoid 56 comprises a coil (not shown) wound around a bobbin (not shown), a case 65 for storing the coil, a cylindrical yoke (not shown) disposed on an inner peripheral portion of the coil, and a plunger 66 that extends from the inside of the yoke to the outside of the case 65. The plunger 66 receives a magnetic attractive force generated in the yoke upon the power feeding to the coil, and thereby moves forward and backward along the axis core direction of the yoke.

A plurality of recesses 67 are formed on the outer side surface of the pedestal 43 at intervals in the circumferential direction of the pedestal 43. The plunger 66 is inserted into one of the plurality of recesses 67.

The power generation system of the present embodiment comprises a control panel (not shown). By operating the control panel, the rotation direction and the rotation angle of the rotating shaft 57 can be set, or the plunger 66 can be moved forward or backward. Further, the power source to cause the rotation of the rotating shaft 57 and the forward and backward movements of the plunger 66 is an electric power generated in the power generator 7.

When the orientation of the swing arm 30 is adjusted, the plunger 66 is first retracted, and the plunger 66 is pulled out of a first recess 67. Then, the rotating shaft 57 is made to rotate, thereby causing a rotary motion of the rotary member 60 around the rotating shaft 57 as the axis. This operation is performed by rotating the pedestal 43 by transmitting the torque of the rotating shaft 57 to the pedestal 43 through the rotary member 60 and the pin 63. With this rotation of the pedestal 43, all of the objects disposed on the pedestal 43, such as the coil spring 42, rotate. With the rotation of the coil spring 42, the second end of the coil spring 42 connected to the block 47 pulls or presses the block 47, thereby moving the block 47 and the tube 51 in the second direction B or the first direction A. By this movement of the tube 51, the swing arm 30 is pulled or pressed, and thereby undergoes a rotary motion in the second direction B or the first direction A about the pin 35 as the axis (the swing arm 30 undergoes a rotary motion in the direction B when it is pulled, and undergoes a rotary motion in the direction A when it is pressed). With this rotary motion of the swing arm 30, the orientation of the swing arm 30 is changed.

The operation for changing the orientation of the swing arm 30 is performed to, for example, enable easy inspection and repair of the arm mechanism 8. When this operation is performed, the user selects the second recess 67, which is supposed to face the plunger 66, among the plurality of recesses 67; when the pedestal 43 undergoes a rotary motion until the second recess 67 and the plunger 66 face each other, the user determines that the swing arm 30 is oriented to the direction in which the cams 21 are not in contact with the first end 36 (the roller 38), and operates to stop the rotation of the rotating shaft 57, thereby stopping the rotation of the pedestal 43.

Further, in the above state in which the plunger 66 faces the second recess 67, the plunger 66 is made to move forward, thereby inserting the plunger 66 into the second recess 67. As a result, the rotation of the pedestal 43 is restricted, thereby maintaining the state in which the swing arm 30 is oriented to the direction in which the cams 21 are not in contact with the first end 36 (the roller 38).

When the orientation of the swing arm 30 is adjusted as described above, the cams 21 are not in contact with the first end 36 (the roller 38) of the swing arm 30 when the cam wheel 18 rotates; therefore, the arm mechanism 8 can be easily inspected or repaired.

The first end 68 of the follower arm 32 is pivotally supported by a pin 35 so as to be capable of a rotary motion. A pin 70 extending in the vertical direction is attached to the second end 69 of the follower arm 32.

The intermediate portion 71 of the drive arm 33 is pivotally supported by the pin 70 so as to be capable of a rotary motion. A pin 73 extending in the vertical direction is attached to the first end 72 of the drive arm 33, and the pin 73 is inserted into the through-hole 40 of the swing arm 30.

An elastic member 75 is attached to the second end 74 of the drive arm 33. The elastic member 75 extends from the second end 74 of the drive arm 33 in the longitudinal direction of the drive arm 33, and the top end portion 76 of the elastic member 75 is disposed in the vicinity of the drive wheel 29. As the elastic member 75, for example, a plate spring may be used; however, an elastic member other than a plate spring may also be used.

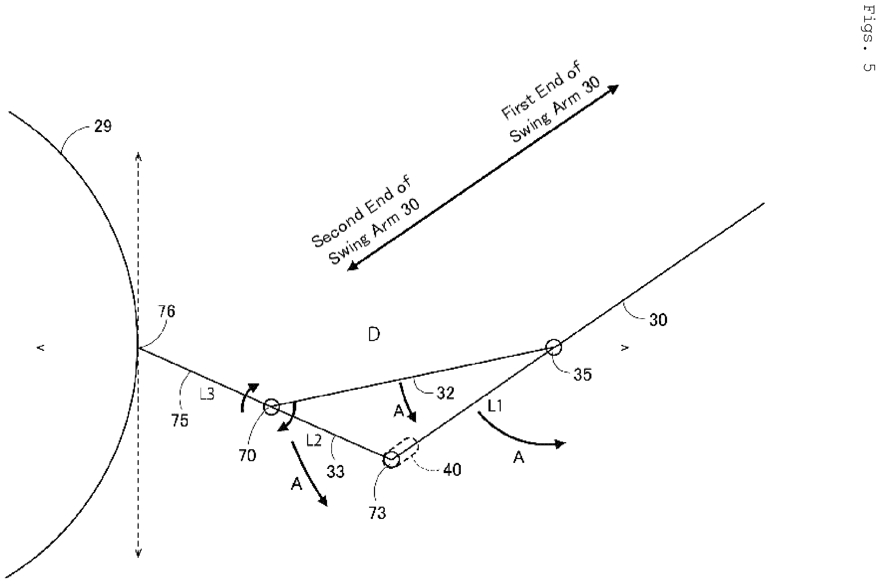

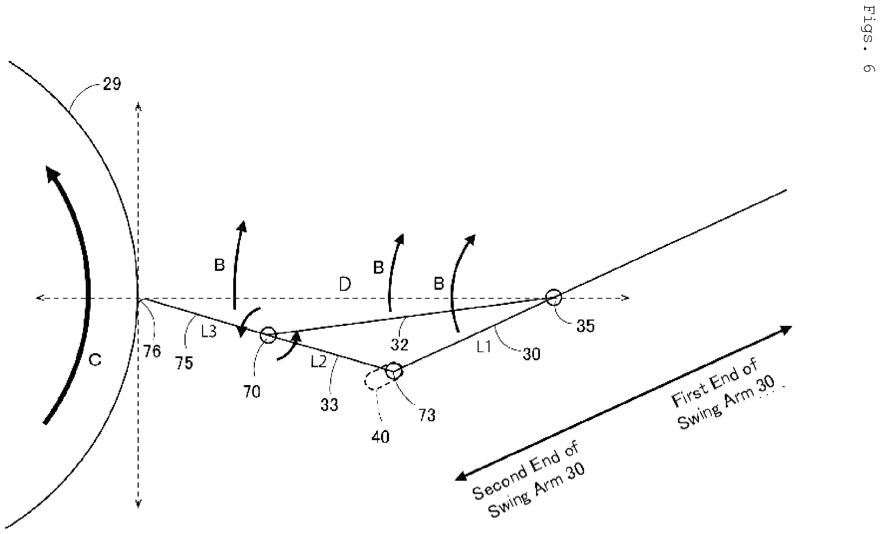

Fig. 5 is a schematic diagram showing the movements of the follower arm 32 and the drive arm 33 during the rotary motion of the swing arm 30 in the first direction A when the cams 21 of the cam wheel 18 come in contact with the roller 38 provided in the first end 36 of the swing arm 30, and thereby press the swing arm 30. Fig. 6 is a schematic diagram showing the movements of the follower arm 32 and the drive arm 33 during the rotary motion of the swing arm 30 in the second direction B by the biasing action of the biasing means 31 (Figs. 1 and 2). The movements of the follower arm 32 and the drive arm 33 during the rotary motion of the swing arm 30 in the first direction A or the second direction B are described below with reference to Figs. 5 and 6. The movements described below are caused by adjusting the relative position of the arm mechanism 8 and the drive wheel 29 to satisfy (1) and (2) below.

(1) As shown in Fig. 5, in the state in which the pin 73 is in contact with the inner peripheral face on the second end side of the through-hole 40, the distance between the pin 35 and the top end of the elastic member 75 is not longer than the shortest distance D between the pin 35 and the outer periphery of the drive wheel 29; accordingly, the top end portion 76 of the elastic member 75 is not in contact with the outer periphery of the drive wheel 29.

(2) As shown in Fig. 6, in the state in which the pin 73 is in contact with the inner peripheral face on the first end side of the through-hole 40, the distance between the pin 35 and the top end of the elastic member 75 is greater than the shortest distance D between the pin 35 and the outer periphery of the drive wheel 29; accordingly, the top end portion 76 of the elastic member 75 comes in contact with the outer periphery of the drive wheel 29.

The "distance between the pin 35 and the top end of the elastic member 75" is a distance based on the assumption that the elastic member 75 extends straight without being curved, as shown in Fig. 5. The distance is determined from the following formula 1.

$$\text{Distance between the pin 35 and the top end of the elastic member 75} = \sqrt{L1^2 + (L2+L3)^2} \quad \text{... Formula 1}$$

L1: Distance between the pin 35 and the pin 73
L2: Distance between the pin 73 and the pin 70
L3: Distance between the pin 70 and the top end of the elastic member 75

The "shortest distance D between the pin 35 and the outer periphery of the drive wheel 29" means a distance between the pin 35 and the outer periphery of the drive wheel 29 on the straight line connecting the pin 35 and the center of the drive wheel 29.

During the rotary motion of the swing arm 30 in the first direction A, as shown in Fig. 5, a rotary motion by moving the pin 73 to the second end side of the swing arm 30 to press the pin 73 against the inner peripheral face on the second end side of the through-hole 40 is generated in the drive arm 33, thereby pressing the pin 73 to the inner peripheral face on the second end side of the through-hole 40. As the pin 73 is thus pressed, the swing arm 30 is made to pull the pin 73 in the first direction A, thereby moving the drive arm 33 in the first direction A. With this movement of the drive arm 33, the pin 70 pulls the follower arm 32 in the first direction A, thereby causing a rotary motion of the follower arm 32 in the first direction A about the pin 35 as the axis.

Further, during the movement of the drive arm 33 in the first direction A (more specifically, during the rotary motion of the swing arm 30 in the first direction A), the rotary motion described above to move the pin 73 to the second end side of the swing arm 30 is generated in the drive arm 33. Accordingly, the elastic member 75 moves in the first direction A in which the top end portion 76 thereof is not in contact with the outer peripheral face of the drive wheel 29.

In contrast, during the rotary motion of the swing arm 30 in the second direction B, as shown in Fig. 6, a rotary motion by moving the pin 73 to the first end side of the swing arm 30 to press the pin 73 against the inner peripheral face on the first end side of the through-hole 40 is generated in the drive arm 33, thereby pressing the pin 73 to the inner peripheral face on the first end side of the through-hole 40. As the pin 73 is thus pressed, the swing arm 30 is made to pull the pin 73 in the second direction B, thereby moving the drive arm 33 in the second direction B. With this movement of the drive arm 33, the pin 70 pulls the follower arm 32 in the second direction B, thereby causing a rotary motion of the follower arm 32 in the second direction B about the pin 35 as the axis.

Further, during the movement of the drive arm 33 in the second direction B (more specifically, during the rotary motion of the swing arm 30 in the second direction B), the rotary motion described above to move the pin 73 to the first end side of the swing arm 30 is generated. Accordingly, the elastic member 75 moves in the second direction B in which the top end portion 76 thereof comes in contact with the outer peripheral face of the drive wheel 29, and the elastic member 75 presses the drive wheel 29. As a result, the drive wheel 29 rotates in one direction C in the circumferential direction thereof, thereby generating power in the power generator 7.

The moving means 9 is capable of moving the arm mechanism 8 to the power generator 7 side (the left side of Figs. 1, 2, and 3) or the opposite side of the power generator 7 (the right side of Figs. 1, 2, and 3). The moving means 9 is provided to adjust the range of the elastic member 75 in contact with the drive wheel 29.

As shown in Fig. 3, the moving means 9 includes a supporting plate 80 for supporting the pin 35, a guide plate 81 on which the supporting plate 80 is placed, and a stepping motor 82.

A screw hole 83 is formed on the side surface of the supporting plate 80. A ridge portion 84 is formed on the lower face of the supporting plate 80. The screw hole 83 and the ridge portion 84 extend from the power generator 7 side (the left side of Figs. 1, 2, and 3) to the opposite side of the power generator 7 (the right side of Figs. 1, 2, and 3).

The guide plate 81 is disposed above the coil spring 42, and the lower face thereof is supported by a shaft member (not shown) that extends upward from the pedestal 43. The coil spring 42 is wound around the shaft member, and is vertically sandwiched between the guide plate 81 and the pedestal 43. A guide groove 85 is formed on the upper face of the guide plate 81. The guide groove 85 extends from the power generator 7 side (the left side of Figs. 1, 2, and 3) to the opposite side of the power generator 7 (the right side of Figs. 1, 2, and 3), and is engaged with the ridge portion 84 of the supporting plate 80.

An angle 86 is attached to a side surface of the guide plate 81. The stepping motor 82 is disposed laterally to the supporting plate 80 and the guide plate 81 by being fixed to the angle 86. The stepping motor 82 comprises a rotating shaft 87. The rotating shaft 87 is screwed into the screw hole 83.

The moving means 9 is capable of moving the supporting plate 80 and the pin 35 to the power generator 7 side (the left side of Figs. 1, 2, and 3) by rotating the rotating shaft 87 in the normal direction. The moving means 9 is capable of moving the supporting plate 80 and the pin 35 to the side opposite to the power generator 7 (the right side of Figs. 1, 2, and 3) by rotating the rotating shaft 87 in the reverse direction. When the supporting plate 80 and the pin 35 are moved to the power generator 7 side (the left side of Figs. 1, 2, and 3) by the normal rotation of the rotating shaft 87, the arm mechanism 8 is moved to the power generator 7 side (the left side of Figs. 1, 2, and 3) by the traction of the pin 35. As a result, while the drive arm 33 is moved in the second direction B (see Fig. 6), the range of the elastic member 75 in contact with the drive wheel 29 can be enlarged. In contrast, when the supporting plate 80 and the pin 35 are moved to the side opposite to the power generator 7 (the right side of Figs. 1, 2, and 3) by the reverse rotation of the rotating shaft 87, the arm mechanism 8 is moved to the side opposite to the power generator 7 (the right side of Figs. 1, 2, and 3) by the traction of the pin 35. Accordingly, the range of the elastic member 75 in contact with the drive wheel 29 can be reduced while the drive arm 33 is moved in the second direction B. While the supporting plate 80 is moved to the cam wheel device 6 side or the opposite side thereof, the movement of the supporting plate 80 is guided by the engagement between the ridge portion 84 and the guide groove 85, thereby smoothly moving the supporting plate 80. The rotation of the rotating shaft 87 is generated by using, as a power source, the electric power generated in the power generator 7, and the rotation direction and the rotation angle of the rotating shaft 87 can be set by an operation of the operation panel (not shown) provided in the power generation system.

As described above, in the power generation system 1 of the present embodiment, the torque of the rotating shaft 11 is transmitted to the drive wheel 29 through the belt mechanism 4, the transmission 3, the cam wheel 18, and the arm mechanism 8, thereby rotating the drive wheel 29. By this rotation, power is generated. Further, since the power generation system 1 of the present embodiment is installed in a river, a channel, a coast, a windy place, or the like, it is possible to add hydraulic power, wind power, or the like to the rotating shaft 11, thereby rotating the rotating shaft 11. Therefore, by being installed in a river, a channel, a coast, a windy place, or the like, the power generation system 1 of the present embodiment is capable of generating power using a natural energy, such as hydraulic power, wind power, or the like.

Furthermore, in the power generation system 1 of the present embodiment, by appropriately adjusting the relative position of the arm mechanism 8 and the drive wheel 29, it is possible to bring the elastic member 75 in contact with the drive wheel 29 only when the drive arm 33 is moved in the second direction B (more specifically, only when the swing arm 30 undergoes a rotary motion in the second direction B), and prevent the elastic member 75 from coming in contact with the drive wheel 29 when the drive arm 33 is moved in the first direction A (more specifically, when the swing arm 30 undergoes a rotary motion in the first direction A). Therefore, only the force to rotate the drive wheel 29 in one direction C of the circumferential direction is applied to the drive wheel 29 from the elastic member 75, and the force in the opposite direction is not applied to the drive wheel 29 from the elastic member 75. Therefore, in the power generation system 1, it is possible to rotate the drive wheel 29 in one direction C of the circumference direction of the drive wheel 29 without decelerating the drive wheel 29, thereby increasing the amount of power generation.

Further, according to the power generation system 1 of the present embodiment, by providing the moving means 9, the arm mechanism 8 can be moved to the power generator 7 side (the left side of Figs. 1, 2, and 3), or to the side opposite to the power generator 7 (the right side of Figs. 1, 2, and 3). Therefore, since the range of the elastic member 75 in contact with the outer peripheral face of the drive wheel 29 can be changed while the drive arm 33 is moved in the second direction B, it is possible to adjust the force applied to the drive wheel 29 from the elastic member 75. This enables adjustment of the rotation rate of the drive wheel 29, thereby adjusting the amount of power generation by the power generator 7 per unit time to a desired amount.

Further, in the power generation system 1 of the present embodiment, the torque of the rotating shaft 11 is transmitted to the cam wheel 18 through the belt mechanism 4, the transmission 3, and the main drive shaft 19, thereby rotating the cam wheel 18. By controlling the transmission ratio in the transmission 3 so that the rotation rate of the output shaft 14 becomes constant, the rotation rate of the cam wheel 18 can be kept constant even when the rotation rate of the rotating shaft 11 is not constant, thereby equalizing the time interval at which the cams 21 come in contact with the swing arm 30. As a result, the time interval at which the elastic member 75 comes in contact with the drive wheel 29 becomes constant, thereby equalizing the rotation rate of the drive wheel 29. Therefore, power generation is stably performed in the power generation system 1 of the present embodiment.

Furthermore, in the power generation system 1 of the present embodiment, since the orientation of the swing arm 30 can be adjusted by the rotating means 54, it is possible to prevent the cams 21 from coming in contact with the first end 36 (roller 38) of the swing arm 30 upon inspection or repair of the arm mechanism 8. In this manner, the swing arm 30 is prevented from the rotary motion, thereby enabling easy inspection or repair of the arm mechanism 8.

Further, in the power generation system 1 of the present embodiment, by disconnecting the main drive shaft 19 and the cam wheel 18 by the clutch mechanism 20, the cam wheel 18 stops the rotation, so that the cams 21 do not come in contact with the first end 36 (roller 38) of the swing arm 30. In this way as well, since the swing arm 30 is prevented from the rotary motion, the arm mechanism 8 can be easily inspected or repaired.

The power generation system 1 according to the present invention is not limited to those described in the above embodiments, and may be modified in various ways.

For example, in the embodiment described above, the through-hole 40 is formed on the second end 39 of the swing arm 30, and the pin 73 is attached to the first end 72 of the drive arm 33. However, in contrast, it may also be structured such that a through-hole is formed on the first end side of the drive arm 33, and a pin extending in the vertical direction is formed on the second end 39 of the swing arm 30, so that the pin is inserted into the through-hole formed on the first end side of the drive arm 33. In this structure as well, the movement shown in Figs. 5 and 6 can be generated in the follower arm 32 and the drive arm 33 while the swing arm 30 undergoes a rotary motion in the first direction A or the second direction B.

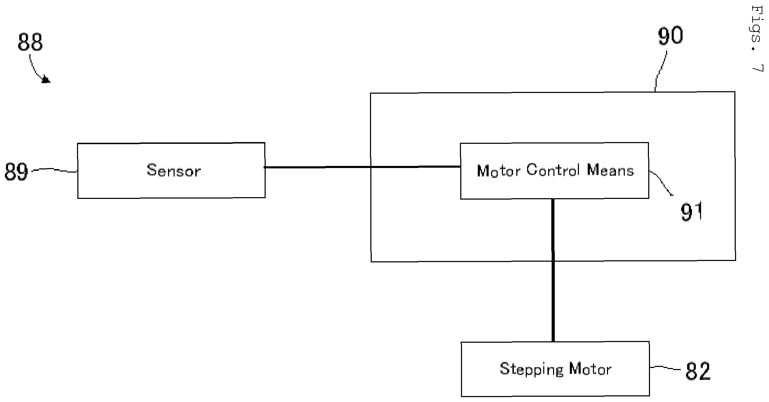

The power generation system 1 of the present invention may also comprise a movement control device 88 for controlling the movement of the arm mechanism 8. Fig. 7 is a block diagram showing a structure of the movement control device 88.

As shown in Fig 7, the movement control device 88 comprises a sensor 89 and a computer 90. The sensor 89 and the computer 90 are operated by electric power generated by the power generator 7.

The sensor 89 is installed in the power generator 7 to measure the rotation rate of the drive wheel 29 per unit time. Known optical sensors or ultrasonic sensors may be used as the sensor 89.

The computer 90 is, for example, a small computer provided in the control panel (not shown) of the power generation system 1. The computer 90 comprises a CPU, a memory, an interface, and an input device. The computer 90 is capable of obtaining the measurement values of the sensor 89 at predetermined time intervals through the interface, storing the measurement values of the sensor 89 in the memory, transmitting signals for enabling the normal/inverse rotation of the rotating shaft 83 to the stepping motor 82 through the interface, and storing the information inputted from the input device in the memory.

In the computer 90, the motor control means 91 is functionally configured by causing the CPU to execute the program stored in the memory. The motor control means 91 serves to control the stepping motor 82 based on the measurement values of the sensor 89.

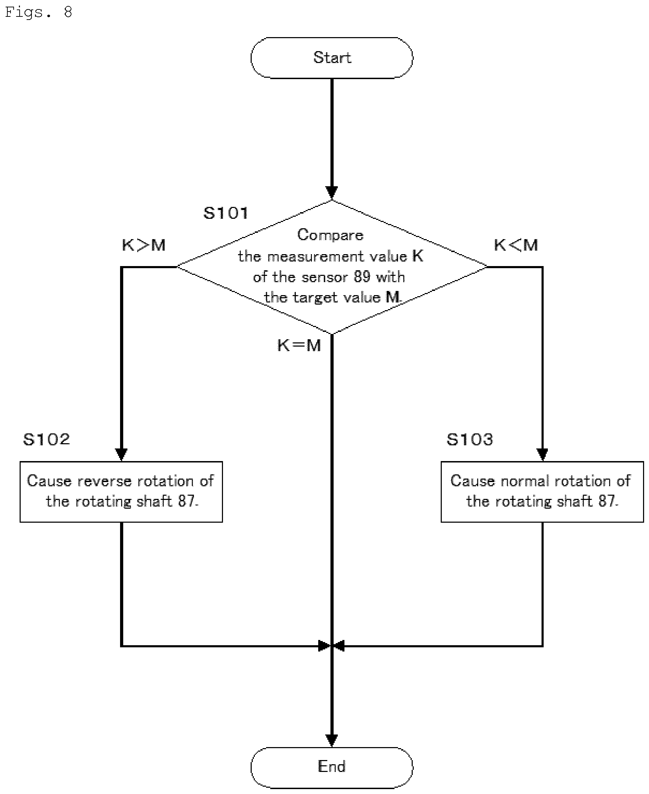

The flowchart in Fig. 8 shows the operation flow performed by the motor control means 91. The operation flow shown in Fig. 8 is executed every time a measurement value K of the sensor 89 is acquired by the computer 90. The operation shown in Fig. 8 is specifically explained below.

First, the motor control means 91 compares the measurement value K of the sensor 89 with the target value M stored in the memory (step S101). The target value M is inputted from the input device, and stored in the memory.

When the measurement value K of the sensor 89 is greater than the target value M (K>M), the motor control means 91 inversely rotates the rotating shaft 87 of the stepping motor 82 by a predetermined angle (step S102). More specifically, the motor control means 91 transmits a signal for inversely rotating the rotating shaft 87 by a predetermined angle to the stepping motor 82 through the interface. As a result, the arm mechanism 8 is moved to the opposite side of the power generator 7 by a predetermined distance, and the range of the elastic member 75 in contact with the drive wheel 29 is reduced while the drive arm 33 is moved in the second direction B.

Further, when the measurement value K of the sensor 89 is smaller than the target value M (K<M), the motor control means 91 normally rotates the rotating shaft 87 of the stepping motor 82 by a predetermined angle. More specifically, the motor control means 91 transmits a signal for normally rotating the rotating shaft 87 by a predetermined angle to the stepping motor 82 through the interface. As a result, the arm mechanism 8 is moved to the power generator 7 side by a predetermined distance, and the range of the elastic member 75 in contact with the drive wheel 29 is enlarged while the drive arm 33 is moved in the second direction B.

Further, when the measurement value K of the sensor 89 is equal to the target value M (K=M), the operation of Fig. 8 ends without causing the rotation of the rotating shaft 87 by the motor control means 91.

According to the operation of Fig. 8, when the rotation rate K of the drive wheel 29 (i.e., the measurement value K of the sensor 89) is greater than the target value M (K>M), the arm mechanism 8 is moved to the opposite side of the power generator 7 due to the reverse rotation of the rotating shaft 87, so that the range of the elastic member 75 in contact with the drive wheel 29 is reduced, thereby decreasing the rotation rate of the drive wheel 29. Further, when the rotation rate of the drive wheel 29 (i.e., the measurement value of the sensor 89) is smaller than the target value (K<M), the arm mechanism 8 is moved to the opposite side of the power generator 7 due to the normal rotation of the rotating shaft 87, so that the range of the elastic member 75 in contact with the drive wheel 29 is enlarged, thereby increasing the rotation rate of the drive wheel 29. In this manner, a rotation rate closer to the target value may be set as the rotation rate of the drive wheel 29.

The angle of the inverse rotation of the rotating shaft 87 by the motor control means 91 in step 102 and the angle of the normal rotation of the rotating shaft 87 by the motor control means 91 in step S103 may be an angle proportional to the absolute value of the difference between the measured value of the sensor 89 and the target value. In this manner, a rotation rate closer to the target value may be rapidly and securely set as the rotation rate of the drive wheel 29.

More specifically, when the rotation rate of the drive wheel 29 (the measurement value of the sensor 89) is significantly greater than the target value, the absolute value of the difference between the measurement value of the sensor 89 and the target value becomes large; accordingly, the motor control means 91 inversely rotates the rotating shaft 87 by a large angle. As a result, the arm mechanism 8 is greatly moved to the opposite side of the power generator 7, and the range of the elastic member 75 in contact with the drive wheel 29 is therefore significantly reduced. Accordingly, the rotation rate of the drive wheel 29 is greatly decreased, and becomes closer to the target value.

Further, when the rotation rate of the drive wheel 29 (the measurement value of the sensor 89) is slightly greater than the target value, the absolute value of the difference between the measurement value of the sensor 89 and the target value becomes large; accordingly, the motor control means 91 inversely rotates the rotating shaft 87 by a small angle. As a result, the arm mechanism 8 is slightly moved to the opposite side of the power generator 7, and the range of the elastic member 75 in contact with the drive wheel 29 is therefore slightly reduced. Accordingly, the rotation rate of the drive wheel 29 is insignificantly decreased, and becomes closer to the target value.

Further, when the rotation rate of the drive wheel 29 (the measurement value of the sensor 89) is significantly smaller than the target value, the absolute value of the difference between the measurement value of the sensor 89 and the target value becomes large; accordingly, the motor control means 91 normally rotates the rotating shaft 87 by a large angle. As a result, the arm mechanism 8 is greatly moved to the power generator side 7, and the range of the elastic member 75 in contact with the drive wheel 29 is therefore significantly enlarged. Accordingly, the rotation rate of the drive wheel 29 is greatly increased, and becomes closer to the target value.

Further, when the rotation rate of the drive wheel 29 (the measurement value of the sensor 89) is slightly smaller than the target value, the absolute value of the difference between the measurement value of the sensor 89 and the target value becomes small; accordingly, the motor control means 91 normally rotates the rotating shaft 87 by a small angle. As a result, the arm mechanism 8 is slightly moved to the power generator 7 side, and the range of the elastic member 75 in contact with the drive wheel 29 is therefore slightly enlarged. Accordingly, the rotation rate of the drive wheel 29 is insignificantly increased, and becomes closer to the target value.

Further, a rotation control device 94 for controlling the rotation of the cam wheel 18 may be provided in the power generation system 1 of the present invention.

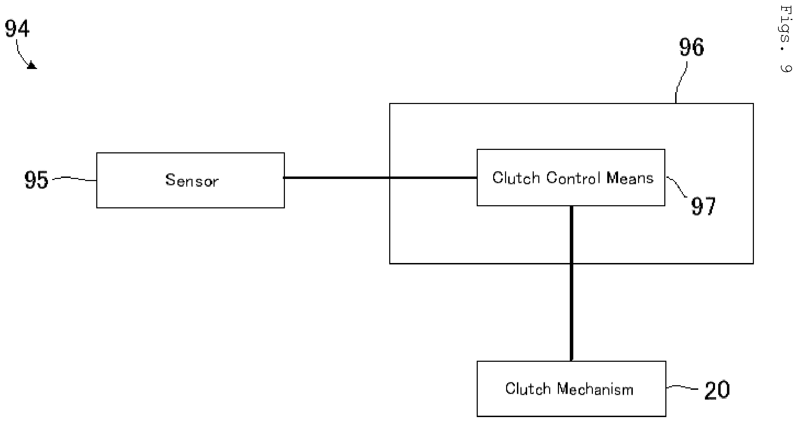

Fig. 9 is a block diagram showing a structure of the rotation control device 94. As shown in Fig 9, the rotation control device 94 comprises a sensor 95 and a computer 96. The sensor 95 and the computer 96 are operated by electric power generated by the power generator 7.

The sensor 95 measures the rotation rate of the main drive shaft 19 per unit time. Known optical sensors or ultrasonic sensors may be used as the sensor 95.

The computer 96 comprises a CPU, a memory, an interface, and an input device. The computer 96 is capable of obtaining the measurement values of the sensor 95 at predetermined time intervals through the interface, storing the measurement values of the sensor 95 in the memory, transmitting signals for connecting or disconnecting the main drive shaft 19 and the cam wheel 18 to the clutch mechanism 20, and storing the information inputted from the input device in the memory.

In the computer 96, the clutch control means 97 is functionally configured by causing the CPU to execute the program stored in the memory. The clutch control means 97 serves to control the clutch mechanism 20 based on the measurement values of the sensor 95.

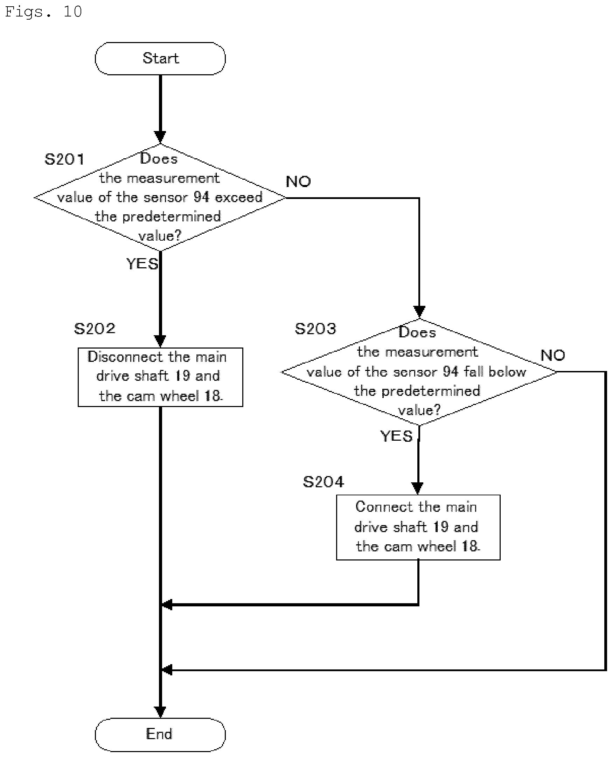

The flowchart in Fig. 10 shows the operation flow performed by the clutch control means 97. The operation flow shown in Fig. 10 is executed every time a measurement value of the sensor 95 is acquired by the computer 96. The operation shown in Fig. 10 is explained below.

First, the clutch control means 97 determines whether or not the measurement value of the sensor 95 exceeds a predetermined value stored in the memory (step S201). The event such that "the measurement value of the sensor 95 exceeds a predetermined value" means that the previous measurement value of the sensor 95 is less than the predetermined value, and the current measurement value of the sensor 95 is equal to or greater than the predetermined value. The predetermined value is inputted from the input device, and stored in the memory.

When the measurement value of the sensor 95 exceeds the predetermined value (YES in step S201), the clutch control means 97 transmits a signal for disconnecting the main drive shaft 19 and the cam wheel 18 to the clutch mechanism 20 through the fourth interface (step S202). As a result, the main drive shaft 19 is disconnected from the cam wheel 18; therefore, the cam wheel 18 does not rotate.

Then, when the measurement value is acquired again from the sensor 89, the operation starting from step S201 is performed again. Further, when the measurement value of the sensor 95 falls below the predetermined value, it is determined as NO in step S201; as a result, the clutch control means 97 determines whether or not the measurement value of the sensor 95 falls below the predetermined value stored in the memory (step S203). The event such that "the measurement value of the sensor 95 falls below a predetermined value" means that the previous measurement value of the sensor 95 is not less than the predetermined value, and the current measurement value of the sensor 95 is less than the predetermined value.

Further, when the measurement value of the sensor 95 falls below the predetermined value (YES in step S203), the clutch control means 97 transmits a signal for connecting the main drive shaft 19 and the cam wheel 18 to the clutch mechanism 20 through the fourth interface (step S204). As a result, the main drive shaft 19 is connected to the cam wheel 18; therefore, the cam wheel 18 rotates.

The rotation control device 94 described above is capable of stopping the rotation of the cam wheel 18 when the cam wheel 18 rotates at a high speed. Therefore, the swing arm 30 can be prevented from damage due to the impact applied from the cams 21.

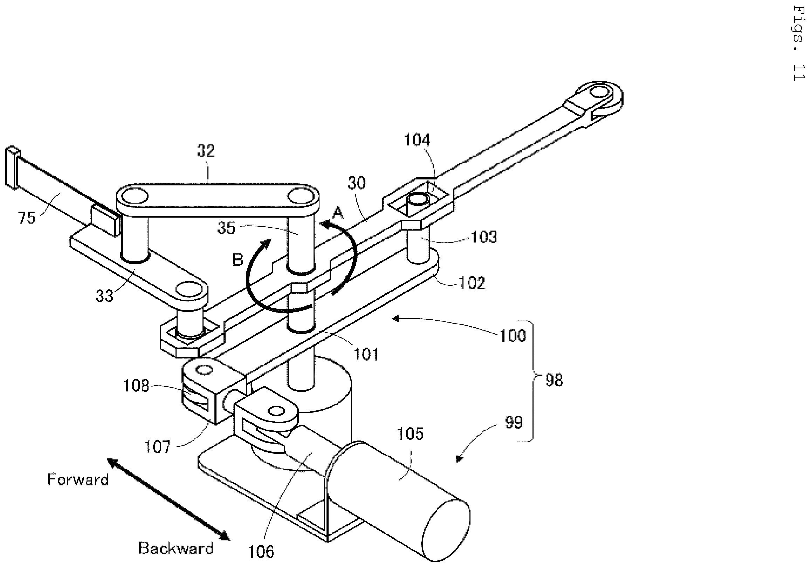

In the power generation system of the present invention, a biasing means 98 shown in Fig. 11 may be provided instead of the biasing means 31 shown in Figs. 1 to 3.

The biasing means 98 comprises an accumulator 99 and a rotary member 100.

In the rotary member 100, the intermediate portion 101 is pivotally supported by the pin 35 so as to be capable of a rotary motion. A pin 103 extending in the vertical direction is fixed to the first end 102 of the rotary member 100, and the pin 103 is inserted into the through-hole 104 formed on the first end side of the swing arm 30.

The accumulator 99 comprises a container 105 for storing accumulation gas, and a piston 106 extending from the container 105. The top end portion 107 of the piston 106 is connected to the second end 108 of the rotary member 100.

With the biasing means 98 described above, the rotary member 100 undergoes a rotary motion in the first direction A with the rotary motion of the swing arm 30 in the first direction A, thereby retreating the piston 106 toward the container 105. With this retreat of the piston 106, surplus gas is introduced into the container 105, thereby compressing the accumulation gas. Then, the piston 106 is moved forward to the opposite side of the container 105 by the expansion force of the compressed accumulation gas; with this forward movement, the rotating member 100 and the swing arm 30 are biased in the second direction B, thereby causing a rotary motion of the rotary member 100 and the swing arm 30 in the second direction B.

Additionally, when the biasing means 98 described above is provided, the swing arm 30 can be biased toward the second direction B to thereby rotate the swing arm 30 in the second direction B, as in the case of providing the biasing means 31 shown in Figs. 1 to 3. Accordingly, it is possible to bring the elastic member 75 in contact with the drive wheel 29 and thereby rotate the drive wheel 29, thus enabling power generation. The biasing means 98 transmits the expansion force of the accumulation gas to the swing arm 30 through the rotary member 100 to thereby bias the swing arm 30 in the second direction B. However, for example, it is also possible to transmit the expansion force of the accumulation gas to the swing arm 30 by connecting the top end portion 107 of the piston 106 to the first end of the swing arm 30, thereby biasing the swing arm 30 in the second direction B.

The rotary member 100 may be omitted; instead, the top end portion 107 of the piston 106 may be connected to the second end 39 of the swing arm 30. In this case, when the swing arm 30 undergoes a rotary motion in the first direction A, the swing arm 30 presses the piston 106, thereby retreating the piston 106 toward the container 105. With this retreat of the piston 106, surplus gas is introduced into the container 105, thereby compressing the accumulation gas. Then, the piston 106 is moved forward to the opposite side of the container 105 by the expansion force of the compressed accumulation gas; with this forward movement, the swing arm 30 is biased in the second direction B, thereby causing a rotary motion of the swing arm 30 in the second direction B.

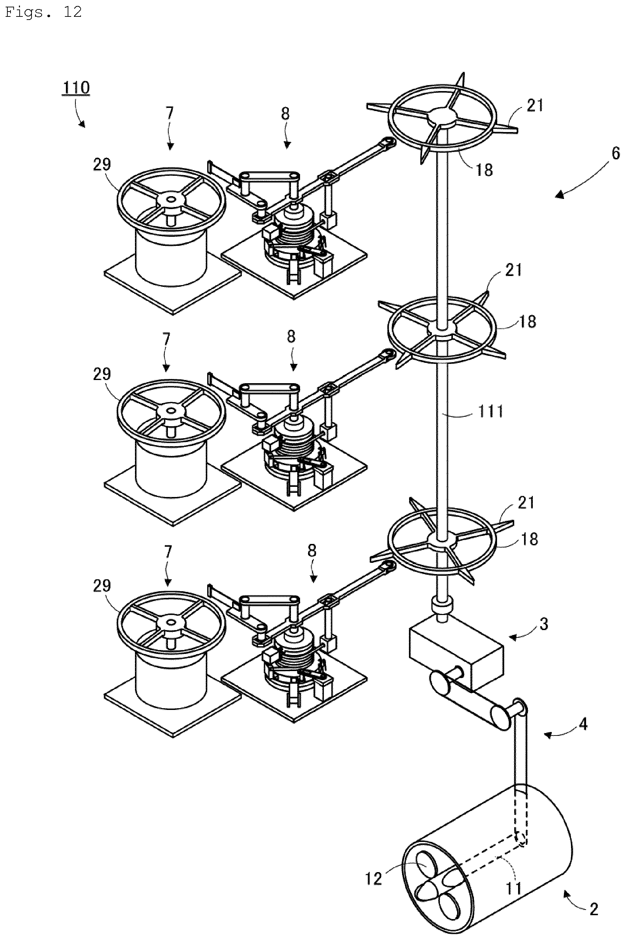

The power generation system of the present invention may be modified as shown in Fig. 12. In the power generation system 110 shown in Fig. 12, the cam wheel device 6 comprises three cam wheels 18, and a main drive shaft 111 for rotatably supporting the three cam wheels 18. Further, the arm mechanism 8 and the power generator 7 are provided for each of the cam wheels 18.

In the power generation system 110 of the modification example shown in Fig. 12, the torque of the rotating shaft 11 of the turbine 2 is transmitted to the main drive shaft 111, thereby rotating the main drive shaft 111. Then, the torque of the main drive shaft 111 is transmitted to each of the cam wheels 18, thereby rotating the cam wheels 18. Then, the cams 21 of each cam wheel 18 individually come in contact with the first end of the swing arm 30 of the arm mechanism 8, so that the rotary motions in the direction A and the direction B shown in Figs. 2 and 3 are generated in the swing arm 30 of each arm mechanism 8. During the rotary motion of the swing arm 30 of each arm mechanism 8 in the direction B, the elastic member 75 of each arm mechanism 8 comes in contact with the drive wheel 29 of the power generator 7. As a result, the drive wheel 29 of each power generator 7 rotates, thereby generating power in each power generator 7.

According to the power generation system 110 of the modification example shown in Fig. 12, since the drive wheels 29 in the plurality of power generators 7 can be rotated by the rotation of the single rotating shaft 11, a large amount of power generation can be ensured while ensuring a low equipment cost. Therefore, it is possible to increase power generation efficiency.

The number of cam wheels 18, arm mechanisms 8, and power generators 7 provided in the power generation system 110 of the modification example are not limited to 3 as in the illustrated example, and may be a plural number other than 3.

Further, the power generation system 110 of the modification example is preferably structured such that the cams 21 projecting from the outer peripheral face of one of the plurality of cam wheels 18 are not overlapped in a plan view with the cams 21 protruding from the outer peripheral face of another cam wheel 18. With this structure, the cams 21 of the plurality of cam wheels 18 do not simultaneously come in contact with the first end of each swing arm 30 (more specifically, the cams 21 of each cam wheel 18 come in contact with the swing arm 30 at different timing); therefore, the plurality of swing arms 30 provided in the power generation system 110 undergo a rotary motion, even if the rotational force of the main drive shaft 111 is small.

Description of Reference Numerals

| | |
|---|---|
| 1, 110: | Power Generation System |
| 2: | Turbine |
| 3: | Transmission |
| 6: | Cam Wheel Device |
| 7: | Power Generator |
| 8: | Arm Mechanism |
| 9: | Moving Means |
| 11: | Rotating Shaft (First Rotating Shaft) |
| 13: | Input Shaft |
| 14: | Output Shaft |
| 18: | Cam Wheel |
| 19: | Main Drive Shaft |
| 20: | Clutch Mechanism |
| 21: | Cam |
| 28: | Rotating Shaft (Second Rotating Shaft) |
| 29: | Drive Wheel |
| 30: | Swing Arm |
| 31: | Biasing Means |
| 32: | Follower Arm |
| 33: | Drive Arm |
| 34: | Intermediate Portion of Swing Arm |
| 35: | Pin (First Pin) |
| 36: | First End of Swing Arm |
| 39: | Second End of Swing Arm |
| 40: | Through-Hole (First Through-Hole) |
| 41: | Through-Hole (Second Through-Hole) |
| 42: | Coil Spring |
| 43: | Pedestal |
| 44: | Block (First Block) |
| 47: | Block (Second Block) |
| 51: | Tube |
| 54: | Rotating Means |
| 55: | Drive Mechanism |
| 56: | Solenoid |
| 57: | Rotating Shaft (Fourth Rotating Shaft) |
| 58: | Stepping Motor (Second Stepping Motor) |

| 60: | Rotary Member |
| 62: | Through-Hole (Third Through-Hole) |
| 63: | Pin (Fourth Pin) |
| 66: | Plunger |
| 67: | Recess |
| 68: | First End of Follower Arm |
| 69: | Second End of Follower Arm |
| 70: | Pin (Second Pin) |
| 71: | Intermediate Portion of Drive Arm |
| 72: | First End of Drive Arm |
| 73: | Pin (Third Pin) |
| 74: | Second End of Drive Arm |
| 75: | Elastic Member |
| 76: | Top End Portion of Elastic Member |
| 80: | Supporting Plate |
| 82: | Stepping Motor (First Stepping Motor) |
| 83: | Screw Hole |
| 87: | Rotating Shaft (Third Rotating Shaft) |
| 88: | Movement Control Device |
| 89: | Sensor (First Sensor) |
| 91: | Motor Control Means |
| 94: | Rotation Control Device |
| 95: | Sensor (Second Sensor) |
| 97: | Clutch Control Means |
| 99: | Accumulator |
| 105: | Container |
| A: | First Direction |
| B: | Second Direction |

**Claims**

1. A power generation system (1, 110), comprising:

> a turbine (2) having a first rotating shaft that rotates by application of hydraulic power or wind power;
> a cam wheel device (6) comprising a cam wheel (18) having cams (21) projecting from an outer peripheral face, the cam wheel (18) rotating as a torque of the first rotating shaft is transmitted to the cam wheel (18);
> a power generator (7) comprising a second rotating shaft and a drive wheel (29) connected to the second rotating shaft, the power generator (7) being capable of generating electric power by converting rotational energy of the second rotating shaft, which is generated as the second rotating shaft rotates along with the rotation of the drive wheel (29), to electric energy; and
> an arm mechanism (8) disposed between the cam wheel device (6) and the power generator (7),
> wherein:
> as the cams (21) are brought in contact with the arm mechanism (8) along with the rotation of the cam wheel (18), a rotary motion is generated in the arm mechanism (8), and the arm mechanism (8) is brought in contact with the drive wheel (29) by the rotary motion, thereby rotating the drive wheel (29); **characterized in that**:
>
>> the arm mechanism (8) comprises a swing arm (30), a biasing means (31), a follower arm (32), and a drive arm (33);
>> an intermediate portion (34) of the swing arm (30) is pivotally supported by a first pin (35) extending in the vertical direction so as to be capable of a rotary motion, a first end portion (36) of the swing arm (30) is disposed in the vicinity of the cam wheel (18), and a first through-hole (40), which extends in the longitudinal direction of the swing arm (30), is formed on a second end (39) of the swing arm (30);
>> each time the cams (21) come in contact with the first end portion (36) of the swing arm (30) by rotation of the cam wheel (18), a rotary motion is generated in the swing arm (30) around the first pin (35) as the axis in the first direction due to the pressing force of the cams (21);
>> the biasing means (31) biases the swing arm (30) toward a second direction, which is opposite to the first direction, every time the swing arm (30) undergoes a rotary motion in the first direction, and, after the swing

16

arm (30) undergoes a rotary motion in the first direction, the swing arm (30) inverts to undergo a rotary motion in the second direction by the biasing force of the biasing means (31);

a first end portion (68) of the follower arm (32) is pivotally supported by the first pin (35) so as to be capable of a rotary motion, and a second pin (70) extending in the vertical direction is attached to a second end portion (69) of the follower arm (32);

an intermediate portion (71) of the drive arm (33) is pivotally supported by the second pin (70) so as to be capable of a rotary motion, a third pin (73) extending in the vertical direction is attached to a first end portion (72) of the drive arm (33), and the third pin (73) is inserted in the first through-hole (40) of the swing arm (30);

an elastic member (75) is attached to a second end portion (74) of the drive arm (33), the elastic member (75) extends from the second end portion (74) of the drive arm (33) in the longitudinal direction of the drive arm (33), and a top end portion (76) of the elastic member (75) is disposed in the vicinity of the drive wheel (29);

during the rotary motion of the swing arm (30) in the first direction, since a rotary motion to press the third pin (73) against an inner peripheral face of the first through-hole (40) of the swing arm (30) is generated in the drive arm (33) by moving the third pin (73) to a second end side of the swing arm (30), the swing arm (30) pulls the third pin (73) in the first direction, thereby moving the drive arm (33)in the first direction, and the follower arm (32) undergoes a rotary motion in the first direction around the first pin (35) as the axis by pulling of the second pin (70);

while the drive arm (33) moves in the first direction, due to the rotary motion to move the third pin (73) to the second end side of the swing arm (30) generated in the drive arm (33), the elastic member (75) moves in the first direction in which the top end portion (76) thereof does not come in contact with an outer peripheral face of the drive wheel (29);

during the rotary motion of the swing arm (30) in the second direction, since a rotary motion to press the third pin (73) against the inner peripheral face of the first through-hole (40) of the swing arm (30) is generated in the drive arm (33) by moving the third pin (73) to the first end side of the swing arm (30), the swing arm (30) pulls the third pin (73) in the second direction, thereby moving the drive arm (33) in the second direction, and the follower arm (32) undergoes a rotary motion in the second direction around the first pin (35) as the axis by pulling of the second pin (70); and

while the drive arm (33) moves in the second direction, due to the rotary motion to move the third pin (73) to the first end side of the swing arm (30) generated in the drive arm (33), the elastic member (75) moves in the second direction in which the top end portion (76) thereof comes in contact with the outer peripheral face of the drive wheel (29), and the drive wheel (29) rotates by pressing by the elastic member (75).

2. The power generation system (1, 110) according to claim 1, further comprising a moving means (9) capable of moving the arm mechanism (8) to a power generator side or a side opposite to the power generator (7), wherein:

by moving the arm mechanism (8) to the power generator side by the moving means (9), a range of the elastic member (75) in contact with the outer peripheral face of the drive wheel (29) while the drive arm (33) moves in the second direction is enlarged; and

by moving the arm mechanism (8) to the side opposite to the power generator (7) by the moving means (9), the range of the elastic member (75) in contact with the outer peripheral face of the drive wheel (29) while the drive arm (33) moves in the second direction is reduced.

3. The power generation system (1, 110) according to claim 2, wherein:

the moving means (9) comprises a supporting plate (80) for supporting the first pin (35), and a first stepping motor (82) ;

a screw hole (83) is formed on a side surface of the supporting plate (80);

the first stepping motor (82) is disposed laterally to the supporting plate (80) and comprises a third rotating shaft, (87) which is screwed into the screw hole (83);

by rotating the third rotating shaft (87) of the first stepping motor (82) in the normal direction, the supporting plate (80) and the first pin (35) move to the power generator side, thereby moving the arm mechanism (8) to the power generator side; and

by rotating the third rotating shaft (87) of the first stepping motor (82) in the reverse direction, the supporting plate (80) and the first pin (35) move to the side opposite to the power generator (7), thereby moving the arm mechanism (8) to the side opposite to the power generator (7).

4. The power generation system (1, 110) according to claim 3, further comprising a movement control device (88) for controlling movement of the arm mechanism (8), wherein:

the movement control device (88) comprises a first sensor (89) for measuring the rotation rate per unit time of the drive wheel (29), and a motor control means (91) for controlling the first stepping motor (82) based on a measurement value of the first sensor (89);

the motor control means (91) inversely rotates the third rotating shaft (87) of the first stepping motor (82) when the measurement value of the first sensor (89) is greater than a target value; and

the motor control means (91) normally rotates the third rotating shaft (87) of the first stepping motor (82) when the measurement value of the first sensor (89) is smaller than the target value.

5. The power generation system (1, 110) according to any one of claims 1 to 4, further comprising a rotation control device (94) for controlling rotation of the cam wheel (18), wherein:

the cam wheel device (6) further comprises a main drive shaft (19) for rotatably supporting the cam wheel (18), and a clutch mechanism (20) for switching connection and disconnection between the main drive shaft (19) and the cam wheel (18);

the main drive shaft (19) rotates as the torque of the first rotating shaft (11) is transmitted to the main drive shaft (19) ;

in a state where the main drive shaft (19) and the cam wheel (18) are connected, the cam wheel (18) rotates as the torque of the main drive shaft (19) is transmitted to the cam wheel (18);

in a state where the main drive shaft (19) and the cam wheel (18) are disconnected, the cam wheel (18) does not rotate because the torque of the main drive shaft (19) is not transmitted to the cam wheel (18);

the rotation control device (94) comprises a second sensor (95) for measuring a rotation rate per unit time of the main drive shaft (19), and a clutch control means (97) for controlling the clutch mechanism (20) based on a measurement value of the second sensor (95);

the clutch control means (97) causes the clutch mechanism (20) to disconnect the main drive shaft (19) and the cam wheel (18) when the measurement value of the second sensor (95) is greater than a predetermined value; and

the clutch control means (97) causes the clutch mechanism to connect the main drive shaft (19) and the cam wheel (18) when the measurement value of the second sensor (95) falls below the predetermined value.

6. The power generation system (1, 110) according to any one of claims 1 to 5, further comprising a transmission (3), wherein:

the transmission (3) comprises an input shaft (13) that rotates as the torque of the first rotating shaft (11) is transmitted; an output shaft (14) that rotates as the torque of the input shaft (13) is transmitted; a third sensor that measures an input rotation rate, which is a rotation rate of the input shaft (13) per unit time; a fourth sensor that measures an output rotation rate, which is a rotation rate of the output shaft (14) per unit time; and a control means for controlling a transmission ratio, which is a ratio of the input rotation rate to the output rotation rate so that the output rotation rate becomes constant; and

the cam wheel (18) rotates as the torque of the output shaft (14) is transmitted to the cam wheel (18).

7. The power generation system (1, 100) according to any one of claims 1 to 6, wherein:

the biasing means (31) comprises a coil spring (42); and

with the rotary motion of the swing arm (30) in the first direction, a force is applied to the coil spring (42) in its helical direction so that the diameter of the coil spring (42) is reduced, and the swing arm (30) is biased toward the second direction by a repulsive force of the coil spring (42) against the applied force.

8. The power generation system (1, 110) according to claim 7, wherein the biasing means (31) further comprises a pedestal (43) on which the coil spring (42) is placed, and a rotating means (54) for rotating the pedestal (43) in its circumferential direction;

a first end portion of the coil spring (42) is connected to the pedestal (43) or a first block (44) fixed to the pedestal (43); and

a second end portion of the coil spring (42) is connected to the swing arm (30) or a second block (47) from which a tube (51) to be inserted into a second through-hole (41) of the swing arm (30) extends.

9. The power generation system (1, 110) according to claim 8, wherein:

   the rotating means (54) comprises a drive mechanism (55) disposed around the pedestal (43), and a solenoid (56);
   the drive mechanism (55) comprises a second stepping motor (58) comprising a fourth rotating shaft (57), and a rotary member (60) that has a first end fixed to the fourth rotating shaft (57) and that undergoes a rotary motion with rotation of the fourth rotating shaft (57) around the fourth rotating shaft (57) as the axis;
   the solenoid (56) comprises a coil wound around a bobbin, a case storing the coil, a cylindrical yoke disposed on an inner peripheral portion of the coil, and a plunger (66) that is disposed in an inner peripheral portion of the yoke and that receives a magnetic attractive force generated in the yoke upon power feeding to the coil and that performs forward and backward movement along the axis core direction of the yoke;
   a third through-hole (62) that penetrates through the rotary member (60) is formed on a second end of the rotary member (60), and extends in the longitudinal direction of the rotary member (60) ;
   a fourth pin (63) that extends upward is attached to the outer periphery of the pedestal (43), and the fourth pin (63) is inserted in the third through-hole (62) of the rotary member (60);
   a plurality of recesses (62) is formed in an outer side surface of the pedestal (43) at intervals in the circumferential direction of the pedestal (43), and the plunger (66) is inserted into one of the plurality of recesses (67);
   after the plunger (66) is retreated to be removed from a first recess (67), the fourth rotating shaft (57) is rotated to cause a rotary motion of the rotary member (60), thereby rotating the pedestal (43) to set the plunger (66) to be opposed to a second recess (37); and
   the rotation of the pedestal (43) is regulated by moving the plunger (66) forward and inserting the plunger (66) into the second recess (67) in a state where the plunger (66) is opposed to the second recess (67).

10. The power generation system (1, 110) according to any one of claims 1 to 6, wherein the biasing means (31) comprises an accumulator (99);

   the accumulator (99) comprises a container (105) for storing an accumulation gas; and
   with the rotary motion of the swing arm (30) in the first direction, surplus fluid is introduced into the container (105), thereby compressing the accumulation gas, so that the swing arm (30) is biased toward the second direction by an expansion force of the compressed accumulation gas.

11. The power generation system (1, 110) according to any one of claims 1 to 10, wherein:

   the cam wheel device (6) comprises a plurality of the cam wheels (18) and a or the main drive shaft (19) pivotally supporting the plurality of cam wheels (18) while allowing them to be rotatable, and the power generator (7) and the arm mechanism (8) are provided for each of the cam wheels (18);
   the main drive shaft (19) rotates as the torque of the first rotating shaft (11) is transmitted to the main drive shaft (19); and
   each of the cam wheels (18) rotates as a torque of the main drive shaft (19) is transmitted to each of the cam wheels (18) .


**Patentansprüche**

1. Energieerzeugungssystem (1, 110), das Folgendes umfasst:

   eine Turbine (2) mit einer ersten Drehwelle, die sich durch die Anwendung von Wasserkraft oder Windkraft dreht;
   eine Nockenradvorrichtung (6), die ein Nockenrad (18) umfasst, das Nocken (21) aufweist, die von einer Außenumfangsfläche vorstehen, wobei sich das Nockenrad (18) dreht, während ein Drehmoment der ersten Drehwelle auf das Nockenrad (18) übertragen wird;
   einen Energiegenerator (7), der eine zweite Drehwelle und ein Antriebsrad (29), das mit der zweiten Drehwelle verbunden ist, umfasst, wobei der Energiegenerator (7) durch Umsetzen von Rotationsenergie der zweiten Drehwelle, die erzeugt wird, während sich die zweite Drehwelle zusammen mit der Drehung des Antriebsrads (29) dreht, in elektrische Energie elektrische Leistung erzeugen kann; und

einen Armmechanismus (8), der zwischen der Nockenradvorrichtung (6) und dem Energiegenerator (7) angeordnet ist,

wobei:

während die Nocken (21) mit der Drehung des Nockenrads (18) mit dem Armmechanismus (8) in Kontakt gebracht werden, eine Drehbewegung im Armmechanismus (8) erzeugt wird und der Armmechanismus (8) durch die Drehbewegung mit dem Antriebsrad (29) in Kontakt gebracht wird, wodurch das Antriebsrad (29) gedreht wird; **dadurch gekennzeichnet, dass**:

der Armmechanismus (8) einen Schwenkarm (30), ein Vorbelastungsmittel (31), einen Nachlaufarm (32) und einen Antriebsarm (33) umfasst;

ein Zwischenabschnitt (34) des Schwenkarms (30) durch einen ersten Stift (35), der sich in der vertikalen Richtung erstreckt, auf drehbare Weise getragen wird, derart, dass er zu einer Drehbewegung befähigt ist, ein erster Endabschnitt (36) des Schwenkarms (30) in der Umgebung des Nockenrads (18) angeordnet ist und ein erstes Durchgangsloch (40), das sich in der Längsrichtung des Schwenkarms (30) erstreckt, an einem zweiten Ende (39) des Schwenkarms (30) gebildet ist;

jedes Mal dann, wenn die Nocken (21) durch Drehung des Nockenrads (18) mit dem ersten Endabschnitt (36) des Schwenkarms (30) in Kontakt gelangen, aufgrund der Drückkraft der Nocken (21) eine Drehbewegung des Schwenkarms (30) um den ersten Stift (35) als die Achse in der ersten Richtung erzeugt wird;

das Vorbelastungsmittel (31) den Schwenkarm (30) jedes Mal dann, wenn der Schwenkarm (30) eine Drehbewegung in der ersten Richtung erfährt, in Richtung einer zweiten Richtung vorbelastet, die zur ersten Richtung entgegengesetzt ist, und nachdem der Schwenkarm (30) eine Drehbewegung in der ersten Richtung erfahren hat, der Schwenkarm (30) durch die Vorbelastungskraft des Vorbelastungsmittels (31) umkehrt, derart, dass er eine Drehbewegung in der zweiten Richtung erfährt;

ein erster Endabschnitt (68) des Nachlaufarms (32) durch den ersten Stift (35) auf drehbare Weise getragen wird, derart, dass er zu einer Drehbewegung befähigt ist, und ein zweiter Stift (70), der sich in der vertikalen Richtung erstreckt, an einem zweiten Endabschnitt (69) des Nachlaufarms (32) befestigt ist;

ein Zwischenabschnitt (71) des Antriebsarms (33) durch den zweiten Stift (70) auf drehbare Weise getragen wird, derart, dass er zu einer Drehbewegung befähigt ist, ein dritter Stift (73), der sich in der vertikalen Richtung erstreckt, an einem ersten Endabschnitt (72) des Antriebsarms (33) befestigt ist und der dritte Stift (73) in das erste Durchgangsloch (40) des Schwenkarms (30) eingeführt ist;

ein elastisches Element (75) an einem zweiten Endabschnitt (74) des Antriebsarms (33) befestigt ist, das elastische Element (75) sich vom zweiten Endabschnitt (74) des Antriebsarms (33) in der Längsrichtung des Antriebsarms (33) erstreckt und ein oberer Endabschnitt (76) des elastischen Elements (75) in der Umgebung des Antriebsrads (29) angeordnet ist;

da während der Drehbewegung des Schwenkarms (30) in der ersten Richtung eine Drehbewegung, derart, dass der dritte Stift (73) gegen eine Innenumfangsfläche des ersten Durchgangslochs (40) des Schwenkarms (30) gedrückt wird, im Antriebsarm (33) erzeugt wird, indem der dritte Stift (73) zu einer Seite des zweiten Endes des Schwenkarms (30) bewegt wird, der Schwenkarm (30) den dritten Stift (73) in der ersten Richtung zieht, wodurch der Antriebsarm (33) in der ersten Richtung bewegt wird und der Nachlaufarm (32) durch das Ziehen des zweiten Stiftes (70) eine Drehbewegung in der ersten Richtung um den ersten Stift (35) als die Achse erfährt;

während sich der Antriebsarm (33) aufgrund der Drehbewegung, derart, dass der dritte Stift (73) zur Seite des zweiten Endes des Schwenkarms (30) bewegt wird, die im Antriebsarm (33) erzeugt wird, in der ersten Richtung bewegt, das elastische Element (75) sich in der ersten Richtung bewegt, in der sein oberer Endabschnitt (76) nicht mit einer Außenumfangsfläche des Antriebsrads (29) in Kontakt gelangt;

da während der Drehbewegung des Schwenkarms (30) in der zweiten Richtung eine Drehbewegung, derart, dass der dritte Stift (73) gegen die Innenumfangsfläche des ersten Durchgangslochs des Schwenkarms (30) gedrückt wird, im Antriebsarm (33) erzeugt wird, indem der dritte Stift (73) zur Seite des ersten Endes des Schwenkarms (30) bewegt wird, der Schwenkarm (30) den dritten Stift (73) in der zweiten Richtung zieht, wodurch der Antriebsarm (33) in der zweiten Richtung bewegt wird und der Nachlaufarm (32) durch das Ziehen des zweiten Stiftes (70) eine Drehbewegung in der zweiten Richtung um den ersten Stift (35) als die Achse erfährt; und

während sich der Antriebsarm (33) aufgrund der Drehbewegung, derart, dass der dritte Stift (73) zur Seite des ersten Endes des Schwenkarms (30) bewegt wird, die im Antriebsarm (33) erzeugt wird, in der zweiten Richtung bewegt, das elastische Element (75) sich in der zweiten Richtung bewegt, in der sein oberer Endabschnitt (76) mit der Außenumfangsfläche des Antriebsrads (29) in Kontakt gelangt, und das Antriebsrad (29) sich durch das Drücken durch das elastische Element (75) dreht.

2. Energieerzeugungssystem (1, 110) nach Anspruch 1, das ferner ein Bewegungsmittel (9) umfasst, das den Armmechanismus (8) zu einer Seite des Energiegenerators oder zu einer Seite, die zum Energiegenerator (7) entgegengesetzt ist, bewegen kann,
wobei:

durch das Bewegen des Armmechanismus (8) zur Seite des Energiegenerators durch das Bewegungsmittel (9) ein Bereich des elastischen Elements (75), der sich mit der Außenumfangsfläche des Antriebsrads (29) in Kontakt befindet, während sich der Antriebsarm (33) in der zweiten Richtung bewegt, vergrößert wird; und
durch das Bewegen des Armmechanismus (8) zu der Seite, die zum Energiegenerator (7) entgegengesetzt ist, durch das Bewegungsmittel (9) der Bereich des elastischen Elements (75), der sich mit der Außenumfangsfläche des Antriebsrads (29) in Kontakt befindet, während sich der Antriebsarm (33) in der zweiten Richtung bewegt, verringert wird.

3. Energieerzeugungssystem (1, 110) nach Anspruch 2, wobei:

das Bewegungsmittel (9) eine Trägerplatte (80) zum Tragen des ersten Stiftes (35) und einen ersten Schrittmotor (82) umfasst;
ein Gewindeloch (83) auf einer Seitenfläche der Trägerplatte (80) gebildet ist;
der erste Schrittmotor (82) seitlich der Trägerplatte (80) angeordnet ist und eine dritte Drehwelle (87) umfasst, die in das Gewindeloch (83) geschraubt ist;
durch Drehen der dritten Drehwelle (87) des ersten Schrittmotors (82) in der Standardrichtung die Trägerplatte (80) und der erste Stift (35) sich zur Seite des Energiegenerators bewegen, wodurch der Armmechanismus (8) zur Seite des Energiegenerators bewegt wird; und
durch Drehen der dritten Drehwelle (87) des ersten Schrittmotors (82) in der umgekehrten Richtung die Trägerplatte (80) und der erste Stift (35) sich zu der Seite bewegen, die zum Energiegenerator (7) entgegengesetzt ist, wodurch der Armmechanismus (8) zu der Seite bewegt wird, die zum Energiegenerator (7) entgegengesetzt ist.

4. Energieerzeugungssystem (1, 110) nach Anspruch 3, das ferner eine Bewegungssteuervorrichtung (88) zum Steuern der Bewegung des Armmechanismus (8) umfasst,
wobei:

die Bewegungssteuervorrichtung (88) einen ersten Sensor (89) zum Messen der Drehzahl pro Zeiteinheit des Antriebsrads (29) und ein Motorsteuermittel (91) zum Steuern des ersten Schrittmotors (82) auf der Grundlage eines Messwertes des ersten Sensors (89) umfasst;
das Motorsteuermittel (91) die dritte Drehwelle (87) des ersten Schrittmotors (82) in umgekehrter Richtung dreht, wenn der Messwert des ersten Sensors (89) größer als ein Sollwert ist; und
das Motorsteuermittel (91) die dritte Drehwelle (87) des ersten Schrittmotors (82) in der Standardrichtung dreht, wenn der Messwert des ersten Sensors (89) kleiner als der Sollwert ist.

5. Energieerzeugungssystem (1, 110) nach einem der Ansprüche 1 bis 4, das ferner eine Drehungssteuervorrichtung (94) zum Steuern der Drehung des Nockenrads (18) umfasst,
wobei:

die Nockenradvorrichtung (6) ferner eine Hauptantriebswelle (19) zum Tragen des Nockenrads (18) auf drehbare Weise und einen Kupplungsmechanismus (20) zum Umschalten von Verbindung und Trennung zwischen der Hauptantriebswelle (19) und dem Nockenrad (18) umfasst;
die Hauptantriebswelle (19) sich dreht, während das Drehmoment der ersten Drehwelle (11) auf die Hauptantriebswelle (19) übertragen wird;
das Nockenrad (18) sich in einem Zustand, in dem die Hauptantriebswelle (19) und das Nockenrad (18) verbunden sind, dreht, während das Drehmoment der Hauptantriebswelle (19) auf das Nockenrad (18) übertragen wird;
das Nockenrad (18) sich in einem Zustand, in dem die Hauptantriebswelle (19) und das Nockenrad (18) getrennt sind, nicht dreht, weil das Drehmoment der Hauptantriebswelle (19) nicht auf das Nockenrad (18) übertragen wird;
die Drehungssteuervorrichtung (94) einen zweiten Sensor (95) zum Messen einer Drehzahl pro Zeiteinheit der Hauptantriebswelle (19) und ein Kupplungssteuermittel (97) zum Steuern des Kupplungsmechanismus (20) auf der Grundlage eines Messwertes des zweiten Sensors (95) umfasst;

das Kupplungssteuermittel (97) bewirkt, dass der Kupplungsmechanismus (20) die Hauptantriebswelle (19) und das Nockenrad (18) trennt, wenn der Messwert des zweiten Sensors (95) größer als ein vorgegebener Wert ist; und

das Kupplungssteuermittel (97) bewirkt, dass der Kupplungsmechanismus die Hauptantriebswelle (19) und das Nockenrad (18) verbindet, wenn der Messwert des zweiten Sensors (95) unter den vorgegebenen Wert abfällt.

6. Energieerzeugungssystem (1, 110) nach einem der Ansprüche 1 bis 5, das ferner ein Getriebe (3) umfasst, wobei:

das Getriebe (3) eine Eingangswelle (13), die sich dreht, während das Drehmoment der ersten Drehwelle (11) übertragen wird; eine Ausgangswelle (14), die sich dreht, während das Drehmoment der Eingangswelle (13) übertragen wird; einen dritten Sensor, der eine Eingangsdrehzahl misst, die eine Drehzahl der Eingangswelle (13) pro Zeiteinheit ist; einen vierten Sensor, der eine Ausgangsdrehzahl misst, die eine Drehzahl der Ausgangswelle (14) pro Zeiteinheit ist; und ein Steuermittel zum Steuern eines Übertragungsverhältnisses, das ein Verhältnis der Eingangsdrehzahl zur Ausgangsdrehzahl ist, derart, dass die Ausgangsdrehzahl konstant wird, umfasst; und

das Nockenrad (18) sich dreht, während das Drehmoment der Ausgangswelle (14) auf das Nockenrad (18) übertragen wird.

7. Energieerzeugungssystem (1, 110) nach einem der Ansprüche 1 bis 6, wobei:

das Vorbelastungsmittel (31) eine Schraubenfeder (42) umfasst; und

mit der Drehbewegung des Schwenkarms (30) in der ersten Richtung auf die Schraubenfeder (42) eine Kraft in ihrer Schraubenrichtung ausgeübt wird, derart, dass der Durchmesser der Schraubenfeder (42) verringert wird, und der Schwenkarm (30) durch eine abstoßende Kraft der Schraubenfeder (42) gegen die ausgeübte Kraft in Richtung der zweiten Richtung vorbelastet wird.

8. Energieerzeugungssystem (1, 110) nach Anspruch 7, wobei das Vorbelastungsmittel (31) ferner einen Sockel (43), auf dem die Schraubenfeder (42) angeordnet ist, und ein Drehmittel (54) zum Drehen des Sockels (43) in seiner Umfangsrichtung umfasst;

ein erster Endabschnitt der Schraubenfeder (42) mit dem Sockel (43) oder einem ersten Block (44), der am Sockel (43) arretiert ist, verbunden ist; und

ein zweiter Endabschnitt der Schraubenfeder (42) mit dem Schwenkarm (30) oder einem zweiten Block (47), von dem sich ein Rohr (51) erstreckt, das in ein zweites Durchgangsloch (41) des Schwenkarms (30) eingeführt sein soll, verbunden ist.

9. Energieerzeugungssystem (1, 110) nach Anspruch 8, wobei:

das Drehmittel (54) einen Antriebsmechanismus (55), der um den Sockel (43) angeordnet ist, und einen Elektromagneten (56) umfasst;

der Antriebsmechanismus (55) einen zweiten Schrittmotor (58), der eine vierte Drehwelle (57) umfasst, und ein Drehelement (60), das ein erstes Ende, das an der vierten Drehwelle (57) arretiert ist, aufweist und das mit der Drehung der vierten Drehwelle (57) eine Drehbewegung um die vierte Drehwelle (57) als die Achse erfährt, umfasst;

der Elektromagnet (56) eine Spule, die um einen Spulenträger gewickelt ist, ein Gehäuse, das die Spule aufnimmt, ein zylindrisches Joch, das auf einem Innenumfangsabschnitt der Spule angeordnet ist, und einen Kolben (66), der in einem Innenumfangsabschnitt des Jochs angeordnet ist und der eine magnetische Anziehungskraft empfängt, die aufgrund dessen, dass der Spule Energie zugeführt wird, im Joch erzeugt wird, und der eine Bewegung vorwärts und rückwärts entlang der Kernachsenrichtung des Jochs durchführt, umfasst;

ein drittes Durchgangsloch (62), das das Drehelement (60) durchdringt, an einem zweiten Ende des Drehelements (60) gebildet ist und sich in der Längsrichtung des Drehelements (60) erstreckt;

ein vierter Stift (63), der sich nach oben erstreckt, am Außenumfang des Sockels (43) befestigt ist und der vierte Stift (63) in das dritte Durchgangsloch (62) des Drehelements (60) eingeführt ist;

mehrere Vertiefungen (62) in einer Außenseitenfläche des Sockels (43) in Abständen in der Umfangsrichtung des Sockels (43) gebildet sind und der Kolben (66) in eine der mehreren Vertiefungen (67) eingeführt ist;

nachdem der Kolben (66) zurückgezogen worden ist, derart, dass er aus einer ersten Vertiefung (67) entfernt worden ist, die vierte Drehwelle (57) gedreht wird, derart, dass eine Drehbewegung des Drehelements (60) bewirkt wird, wodurch der Sockel (43) gedreht wird, derart, dass der Kolben (66) einer zweiten Vertiefung (37) gegenüberliegend eingestellt wird; und
die Drehung des Sockels (43) reguliert wird, indem in einem Zustand, in dem der Kolben (66) der zweiten Vertiefung (67) gegenüberliegt, der Kolben (66) vorwärts bewegt wird und der Kolben (66) in die zweite Vertiefung (67) eingeführt wird.

10. Energieerzeugungssystem (1, 110) nach einem der Ansprüche 1 bis 6, wobei das Vorbelastungsmittel (31) einen Speicher (99) umfasst;

der Speicher (99) einen Behälter (105) zum Speichern eines Speichergases umfasst; und
mit der Drehbewegung des Schwenkarms (30) in der ersten Richtung überschüssiges Fluid in den Behälter (105) eingebracht wird, wodurch das Speichergas komprimiert wird, derart, dass der Schwenkarm (30) durch eine Expansionskraft des komprimierten Speichergases in Richtung der zweiten Richtung vorbelastet wird.

11. Energieerzeugungssystem (1, 110) nach einem der Ansprüche 1 bis 10, wobei:

die Nockenradvorrichtung (6) mehrere der Nockenräder (18) umfasst und wobei eine oder die Hauptantriebswelle (19) die mehreren Nockenräder (18) auf drehbare Weise trägt, während ermöglicht wird, dass diese drehbar sind, und der Energiegenerator (7) und der Armmechanismus (8) für jedes der Nockenräder (18) vorgesehen sind;
die Hauptantriebswelle (19) sich dreht, während das Drehmoment der ersten Drehwelle (11) auf die Hauptantriebswelle (19) übertragen wird; und
jedes der Nockenräder (18) sich dreht, während ein Drehmoment der Hauptantriebswelle (19) auf jedes der Nockenräder (18) übertragen wird.

## Revendications

1. Système de génération d'énergie (1, 110) comprenant:

une turbine (2) ayant un premier arbre tournant qui tourne par l'application d'une énergie hydraulique ou d'une énergie éolienne ;
un dispositif à roue à cames (6) comportant une roue à cames (18) ayant des cames (21) faisant saillie depuis une face périphérique, cette roue à cames (18) tournant tandis qu'un couple du premier arbre tournant est transmis à la roue à cames (18) ;
un générateur d'énergie électrique (7) comportant un deuxième arbre tournant et une roue d'entraînement (29) connectée au deuxième arbre tournant, ce générateur d'énergie électrique (7) étant capable de générer de l'énergie électrique en convertissant l'énergie de rotation du deuxième arbre tournant, qui est générée tandis que le deuxième arbre tournant tourne avec la rotation de la roue d'entraînement (29), en énergie électrique ; et
un mécanisme à bras (8) disposé entre le dispositif à roue à cames (6) et le générateur d'énergie électrique (7), dans lequel :

tandis que les cames (21) sont mises en contact avec le mécanisme à bras (8) avec la rotation de la roue à cames (18), un mouvement de rotation est produit dans le mécanisme à bras (8), et le mécanisme à bras (8) est mis en contact avec la roue d'entraînement (29) par le mouvement de rotation, faisant tourner ainsi la roue d'entraînement (29) ;

**caractérisé en ce que** :

le mécanisme à bras (8) comporte un bras oscillant (30), un moyen de sollicitation (31), un bras suiveur (32) et un bras d'entraînement (33) ;
une partie intermédiaire (34) du bras oscillant (30) est supportée de manière pivotante par un premier axe (35) s'étendant dans la direction verticale de façon à être capable d'un mouvement de rotation, une première partie extrême (36) du bras oscillant (30) est disposée à proximité de la roue à cames (18), et un premier trou débouchant (40), qui s'étend dans la direction longitudinale du bras oscillant (30), est formé sur une deuxième extrémité (39) du bras oscillant (30) ;

chaque fois que les cames (21) entrent en contact avec la première partie extrême (36) du bras oscillant (30) à cause de la rotation de la roue à cames (18), un mouvement de rotation est produit dans le bras oscillant (30) autour du premier axe (35) comme l'axe de rotation dans le premier sens à cause de la force de pression des cames (21) ;

le moyen de sollicitation (31) sollicite le bras oscillant (30) dans un deuxième sens, qui est opposé au premier sens, chaque fois que le bras oscillant (30) subit un mouvement de rotation dans le premier sens, et, après que le bras oscillant (30) a subi un mouvement de rotation dans le premier sens, le bras oscillant (30) change de sens pour subir un mouvement de rotation dans le deuxième sens à cause de la force de sollicitation du moyen de sollicitation (31) ;

une première partie extrême (68) du bras suiveur (32) est supportée de manière pivotante par le premier axe (35) afin d'être capable d'un mouvement de rotation, et un deuxième axe (70) s'étendant dans la direction verticale est attaché à une deuxième partie extrême (69) du bras suiveur (32) ;

une partie intermédiaire (71) du bras d'entraînement (33) est supportée de manière pivotante par le deuxième axe (70) afin d'être capable d'un mouvement de rotation, un troisième axe (73) s'étendant dans la direction verticale est attaché à une première partie extrême (72) du bras d'entraînement (33), et le troisième axe (73) est inséré dans le premier trou débouchant (40) du bras oscillant (30) ;

un élément élastique (75) est attaché à une deuxième partie extrême (74) du bras d'entraînement (33), cet élément élastique (75) s'étend depuis la deuxième partie extrême (74) du bras d'entraînement (33) dans la direction longitudinale du bras d'entraînement (33), et une partie extrême supérieure (76) de l'élément élastique (75) est disposée à proximité de la roue d'entraînement (29) ;

pendant le mouvement de rotation du bras oscillant (30) dans le premier sens, étant donné qu'un mouvement de rotation pour presser le troisième axe (73) contre la face périphérique interne du premier trou débouchant (40) du bras oscillant (30) est produit dans le bras d'entraînement (33) en bougeant le troisième axe (73) vers un deuxième côté extrême du bras oscillant (30), le bras oscillant (30) tire le troisième axe (73) dans le premier sens, bougeant ainsi le bras d'entraînement (33) dans le premier sens, et le bras suiveur (32) subit un mouvement de rotation dans le premier sens autour du premier axe (35) comme l'axe de rotation par la traction du deuxième axe (70) ;

tandis que le bras d'entraînement (33) bouge dans le premier sens, au cause du mouvement de rotation pour bouger le troisième axe (73) vers le deuxième côté extrême du bras oscillant (30) produit dans le bras d'entraînement (33), l'élément élastique (75) bouge dans le premier sens, la partie extrême supérieure (76) de celui-ci n'entrant pas en contact avec une face périphérique extérieure de la roue d'entraînement (29) ;

pendant le mouvement de rotation du bras oscillant (30) dans le deuxième sens, étant donné qu'un mouvement de rotation pour presser le troisième axe (73) contre la face périphérique interne du premier trou débouchant (40) du bras oscillant (30) est produit dans le bras oscillant (30) en bougeant le troisième axe (73) vers le premier côté extrême du bras oscillant (30), le bras oscillant (30) tire le troisième axe (73) dans le deuxième sens, bougeant ainsi le bras d'entraînement (33) dans le deuxième sens, et le bras suiveur (32) subit un mouvement de rotation dans le deuxième sens autour du premier axe (35) comme l'axe de rotation par la traction du deuxième axe (70 ; et

tandis que le bras d'entraînement (33) bouge dans le deuxième sens, à cause du mouvement de rotation pour bouger le troisième axe (73) vers le premier côté extrême du bras oscillant (30) produit dans le bras d'entraînement (33), l'élément élastique (75) bouge dans le deuxième sens, la partie extrême supérieure (76) de celui-ci entrant en contact avec la face périphérique extérieure du la roue d'entraînement (29), et la roue d'entraînement (29) tourne à cause de la pression appliquée par l'élément élastique (75).

2. Système de génération d'énergie (1, 110) selon la revendication 1, comprenant en outre un moyen de déplacement (9) capable de déplacer le mécanisme à bras (8) vers un côté générateur d'énergie électrique ou vers un côté opposé au générateur d'énergie électrique (7),
dans lequel :

en déplaçant le mécanisme à bras (8) vers le côté générateur d'énergie électrique avec le moyen de déplacement (9), une plage de l'élément élastique (75) en contact avec la face périphérique extérieure de la roue d'entraînement (29) tandis que le bras d'entraînement (33) se déplace dans le deuxième sens est agrandie ; et

en déplaçant le mécanisme à bras (8) vers le côté opposé au générateur d'énergie électrique (7) par le moyen de déplacement (9), la plage de l'élément élastique (75) en contact avec la face périphérique extérieure de la roue d'entraînement (29) tandis que le bras d'entraînement (33) se déplace dans le deuxième sens est réduite.

3. Système de génération d'énergie (1, 110) selon la revendication 2,
dans lequel :

le moyen de déplacement (9) comporte une plaque de support (80) pour supporter le premier axe (35), et un premier moteur pas à pas (82) ;

un trou de vis (83) est formé sur une surface latérale de la plaque de support (80) ;

le premier moteur pas à pas (82) est disposé latéralement par rapport à la plaque de support (80) et comporte un troisième arbre tournant (87), qui est vissé dans le trou de vis (83) ;

en tournant le troisième arbre tournant (87) du premier moteur pas à pas (82) dans le sens normal, la plaque de support (80) et le premier axe (35) se déplacent vers le côté générateur d'énergie électrique, déplaçant ainsi le mécanisme à bras (8) vers le côté générateur d'énergie électrique ; et

en tournant le troisième arbre tournant (87) du premier moteur pas à pas (82) dans le sens inverse, la plaque de support (80) et le premier axe (35) se déplacent vers le côté opposé au générateur d'énergie électrique (7), déplaçant ainsi le mécanisme à bras (8) vers le côté opposé au générateur d'énergie électrique (7).

4. Système de génération d'énergie (1, 110) selon la revendication 3, comprenant en outre un dispositif de commande de mouvement (88) pour commander le mouvement du mécanisme à bras (8),
dans lequel :

le dispositif de commande de mouvement (88) comporte un premier capteur (89) pour mesurer la vitesse de rotation par unité de temps de la roue d'entraînement (29), et un moyen de commande de moteur (91) pour commander le premier moteur pas à pas (82) en se basant sur une valeur de mesure du premier capteur (89) ;

le moyen de commande de moteur (91) fait tourner en sens inverse le troisième arbre tournant (87) du premier moteur pas à pas (82) lorsque la valeur de mesure du premier capteur (89) est plus grande qu'une valeur cible ; et

le moyen de commande de moteur (91) fait tourner normalement le troisième arbre tournant (87) du premier moteur pas à pas (82) lorsque la valeur de mesure du premier capteur (89) est plus petite que la valeur cible.

5. Système de génération d'énergie (1, 110) selon l'une quelconque des revendications 1 à 4, comportant en outre un dispositif de commande de rotation (94) pour commander la rotation de la roue à cames (18),
dans lequel :

le dispositif à roue à cames (6) comporte en outre un arbre d'entraînement principal (19) pour supporter la roue à cames (18) de manière rotative, et un mécanisme d'embrayage (20) pour permuter la connexion et la déconnexion entre l'arbre d'entraînement principal (19) et la roue à cames (18) ;

l'arbre d'entraînement principal (19) tourne tandis que que le couple du premier arbre tournant (11) est transmis à l'arbre d'entraînement principal (19) ;

dans un état dans lequel l'arbre d'entraînement principal (19) et la roue à cames (18) sont connectés, la roue à cames (18) tourne tandis que le couple de l'arbre d'entraînement principal (19) est transmis à la roue à cames (18) ;

dans un état dans lequel l'arbre d'entraînement principal (19) et la roue à cames (18) sont déconnectés, la roue à cames (18) ne tourne pas parce que le couple de l'arbre d'entraînement principal (19) n'est pas transmis à la roue à cames (18) ;

le dispositif de commande de rotation (94) comporte un deuxième capteur (95) pour mesurer une vitesse de rotation par unité de temps de l'arbre d'entraînement principal (19), et un moyen de commande d'embrayage (97) pour commander le mécanisme d'embrayage (20) en se basant sur une valeur de mesure du deuxième capteur (95) ;

le moyen de commande d'embrayage (97) fait en sorte que le mécanisme d'embrayage (20) déconnecte l'arbre d'entraînement principal (19) et la roue à cames (18) lorsque la valeur de mesure du deuxième capteur (95) est plus grande qu'une valeur prédéterminée ; et

le moyen de commande d'embrayage (97) fait en sorte que le mécanisme d'embrayage connecte l'arbre d'entraînement principal (19) et la roue à cames (18) lorsque la valeur de mesure du deuxième capteur (95) tombe en dessous de la valeur prédéterminée.

6. Système de génération d'énergie (1, 110) selon l'une quelconque des revendications 1 à 5, comprenant en outre une transmission (3),
dans lequel :

cette transmission (3) comporte un arbre d'entrée (13) qui tourne tandis que le couple du premier arbre tournant (11) est transmis ; un arbre de sortie (14) qui tourne tandis que le couple de l'arbre d'entrée (13) est transmis ; un troisième capteur qui mesure une vitesse de rotation d'entrée, qui est une vitesse de rotation de l'arbre d'entrée (13) par unité de temps ; un quatrième capteur qui mesure une vitesse de rotation de sortie, qui est une vitesse de rotation de l'arbre de sortie (14) par unité de temps ; et un moyen de commande pour commander un rapport de transmission, qui est un rapport entre la vitesse de rotation d'entrée et la vitesse de rotation de sortie de manière à ce que la vitesse de rotation de sortie devienne constante ; et

la roue à cames (18) tourne tandis que le couple de l'arbre de sortie (14) est transmis à la roue à cames (18) .

7. Système de génération d'énergie (1, 110) selon l'une quelconque des revendications 1 à 6, dans lequel :

le moyen de sollicitation (31) comporte un ressort hélicoïdal (42) ; et
avec le mouvement de rotation du bras oscillant (30) dans le premier sens, une force est appliquée sur le ressort hélicoïdal (42) dans sa direction hélicoïdale de manière à ce que le diamètre du ressort hélicoïdal (42) soit réduit, et le bras oscillant (30) est sollicité dans le deuxième sens par une force de répulsion du ressort hélicoïdal (42) contre la force appliquée.

8. Système de génération d'énergie (1, 110) selon la revendication 7, dans lequel le moyen de sollicitation (31) comporte en outre un socle (43) sur lequel le ressort hélicoïdal (42) est placé, et un moyen de rotation (54) pour faire tourner le socle (43) dans sa direction circonférentielle ;

une première partie extrême du ressort hélicoïdal (42) est connectée au socle (43) ou à un premier bloc (44) fixé sur le socle (43) ; et
une deuxième partie du ressort hélicoïdal (42) est connectée au bras oscillant (30) ou à un deuxième bloc (47) duquel s'étend un tube (51) devant être inséré dans un deuxième trou débouchant (41) du bras oscillant (30).

9. Système de génération d'énergie (1, 110) selon la revendication 8, dans lequel :

le moyen de rotation (54) comporte un mécanisme d'entraînement (55) disposé autour du socle (43), et un solénoïde (56) ;
le mécanisme d'entraînement (55) comporte un deuxième moteur pas à pas (58) comportant un quatrième arbre tournant (57), et un élément tournant (60) qui a une première extrémité fixée au quatrième arbre tournant (57) et qui subit un mouvement de rotation avec la rotation du quatrième arbre tournant (57) autour du quatrième arbre tournant (57) comme l'axe de rotation ;
le solénoïde (56) comporte un enroulement enroulé autour d'une bobine, un boîtier stockant l'enroulement, une culasse cylindrique disposée sur une partie périphérique interne de l'enroulement, et un piston plongeur (66) qui est disposé dans une partie périphérique interne de la culasse et qui reçoit une force d'attraction magnétique générée dans la culasse lors d'une alimentation en énergie à l'enroulement et qui exécute un mouvement en avant et en arrière le long de la direction du noyau axe de la culasse ;
un troisième trou débouchant (62) qui pénètre à travers l'élément tournant (60) est formé sur une deuxième extrémité de l'élément tournant (60), et s'étend dans la direction longitudinale de l'élément tournant (60) ;
un quatrième axe (63) qui s'étend vers le haut est attaché au pourtour extérieur du socle (43), et ce quatrième axe (63) est inséré dans le troisième trou débouchant (62) de l'élément tournant (60) ;
une pluralité d'évidements (62) sont formés dans une surface latérale extérieure du socle (43) à des intervalles dans la direction circonférentielle du socle (43), et le piston plongeur (66) est inséré dans un de la pluralité d'évidements (67) ;
une fois que le piston plongeur (66) est en retrait pour être enlevé d'un premier évidement (67), le quatrième arbre tournant (57) est tourné pour entraîner un mouvement de rotation de l'élément tournant (60), faisant ainsi tourner le socle (43) pour régler le piston plongeur (66) pour qu'il soit opposé à un deuxième évidement (37) ; et
la rotation du socle (43) est régulée en bougeant le piston plongeur (66) en avant et en insérant le piston plongeur (66) dans le deuxième évidement (67) dans un état dans lequel le piston plongeur (66) est opposé au deuxième évidement (67).

10. Système de génération d'énergie (1, 110) selon l'une quelconque des revendications 1 à 6, dans lequel le moyen de sollicitation (31) comporte un accumulateur (99) ;

cet accumulateur (99) comporte un récipient (105) pour stocker un gaz d'accumulation ; et
avec le mouvement de rotation du bras oscillant (30) dans le premier sens, du fluide en surplus est introduit dans le récipient (105), comprimant ainsi le gaz d'accumulation, de manière à ce que le bras oscillant (30) soit sollicité dans le deuxième sens par une force d'expansion du gaz d'accumulation comprimé.

**11.** Système de génération d'énergie (1, 110) selon l'une quelconque des revendications 1 à 10, dans lequel :

le dispositif à roues à cames (6) comporte une pluralité de roues à cames (18) et un ou l'arbre d'entraînement principal (19) supportant de manière pivotante la pluralité de roues à cames (18) tout en leur permettant de tourner, et le générateur d'énergie électrique (7) et le mécanisme à bras (8) sont prévus pour chacune des roues à cames (18) ;

l'arbre d'entraînement principal (19) tourne tandis que le couple du premier arbre tournant (11) est transmis à l'arbre d'entraînement principal (19) ; et

chacune des roues à cames (18) tourne tandis qu'un couple de l'arbre d'entraînement principal (19) est transmis à chacune des roues à cames (18).

Figs. 1

Figs. 2

Figs. 3

Figs. 4

Figs. 5

Figs. 6

First End of
Swing Arm 30

Second End of
Swing Arm 30

35

30

L1

B

B

D

32

73

40

33

L2

70

B

L3

75

76

29

C

Figs. 7

90

91

Motor Control Means

Stepping Motor

82

88

89

Sensor

Figs. 8

```
                          ┌──────────┐
                          │  Start   │
                          └────┬─────┘
                               │
                               ▼
   S101                   ╱─────────────╲
                         ╱   Compare     ╲
   K>M              ╱ the measurement value K ╲      K<M
   ◄────────────  ╱   of the sensor 89 with    ╲  ────────────►
                  ╲    the target value M      ╱
                   ╲                          ╱
                     ╲────────────┬─────────╱
                          K=M     │
                                  │
   S102                           │                  S103
   ┌──────────────────────┐      │      ┌──────────────────────┐
   │ Cause reverse rotation of │  │      │ Cause normal rotation of │
   │   the rotating shaft 87.  │  │      │   the rotating shaft 87. │
   └───────────┬──────────┘      │      └───────────┬──────────┘
               │                  │                  │
               └──────────────────┼──────────────────┘
                                  ▼
                          ┌──────────┐
                          │   End    │
                          └──────────┘
```

Figs. 9

96

97

Clutch Control Means

20

Clutch Mechanism

Sensor

95

94

Figs. 10

```
                    ┌─────────────┐
                    │    Start    │
                    └──────┬──────┘
                           │
                           ▼
                         ╱   ╲
         S201          ╱  Does ╲
                     ╱ the measurement ╲          NO
                    ╱ value of the sensor 94 exceed ╲──────────────┐
                     ╲ the predetermined ╱                         │
                       ╲   value?  ╱                               │
                         ╲   ╱                                     │
                          YES                                      │
                           │                                       ▼
                           │                                     ╱   ╲
     S202                  ▼              S203                  ╱  Does ╲        NO
   ┌─────────────────────────────┐                           ╱ the measurement ╲────┐
   │  Disconnect the main        │                          ╱ value of the sensor 94 fall below ╲   │
   │  drive shaft 19 and         │                           ╲ the predetermined ╱               │
   │  the cam wheel 18.          │                             ╲   value?  ╱                      │
   └──────────────┬──────────────┘                               ╲   ╱                           │
                  │                                                YES                            │
                  │                                  S204           │                             │
                  │                                                 ▼                             │
                  │                               ┌─────────────────────────────┐                │
                  │                               │  Connect the main           │                │
                  │                               │  drive shaft 19 and         │                │
                  │                               │  the cam wheel 18.          │                │
                  │                               └──────────────┬──────────────┘                │
                  │◄───────────────────────────────────────────┘                                │
                  │◄──────────────────────────────────────────────────────────────────────────┘
                  │
                  ▼
           ┌─────────────┐
           │     End     │
           └─────────────┘
```

Figs. 11

EP 3 604 802 B1

Forward

Backward

Figs. 12

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2015288236 A1